# EUROPÄISCHE PATENTSCHRIFT

(11) **EP 3 794 418 B1**
(45) Veröffentlichungstag und Bekanntmachung des Hinweises auf die Patenterteilung: **20.08.2025**
(21) Anmeldenummer: 18833227.4
(22) Anmeldetag: 20.12.2018
(51) Int. Cl.: G05B 19/408, G05B 19/4093

(54) **VERFAHREN ZU EINER ÜBERMITTLUNG EINES WERKZEUGDATENSATZES EINES ZERSPANUNGSWERKZEUGS AN EINE CNC-WERKZEUGMASCHINE**
METHOD FOR TRANSMITTING A SET OF TOOL DATA OF A CUTTING TOOL TO A CNC MACHINE TOOL
PROCÉDÉ DE TRANSMISSION D'UN ENSEMBLE DE DONNÉES D'OUTIL D'UN OUTIL À ENLÈVEMENT DE COPEAUX SUR UNE MACHINE-OUTIL À COMMANDE NUMÉRIQUE PAR CALCULATEUR

(30) Priorität: 15.05.2018 DE 102018111547
(43) Veröffentlichungstag der Anmeldung: 24.03.2021
(73) Patentinhaber: E. Zoller GmbH & Co. KG Einstell- und Messgeräte, 74385 Pleidelsheim (DE)
(72) Erfinder: ZOLLER, Alexander, 74385 Pleidelsheim (DE); PFAU, Christian, 74379 Ingersheim (DE)
(74) Vertreter: Daub, Thomas
(86) Internationale Anmeldenummer: PCT/EP2018/086358
(87) Internationale Veröffentlichungsnummer: WO 2019/219229

(56) Entgegenhaltungen:
- EP-A2- 2 664 973
- EP-A2- 2 664 973
- WO-A1-2014/189972
- DE-A1- 102006 024 904
- DE-A1- 102006 024 904
- DE-A1- 102011 001 076
- DE-U1- 20 010 529
- DE-U1- 20 010 529
- DE-U1- 20 010 529
- DE-U1- 202005 002 748
- RÖSCHINGER M ET AL: "Abschlussbericht zum Verbundprojekt ToolCloud: Unternehmensübergreifendes Lebenszyklusmanagement für Werkzeuge in der Cloud mittels eindeutiger Kennzeichnung und Identifikation", 30 April 2017 (2017-04-30), pages 1 - 92, XP055924386, Retrieved from the Internet <URL:http://mediatum.ub.tum.de/doc/1366213/1366213.pdf> [retrieved on 20220524]

## Beschreibung

### Stand der Technik

Die Erfindung betrifft ein Verfahren zu einer Übermittlung zumindest eines auf einem Speichermedium abgespeicherten Werkzeugeinstellungsdatensatzes eines Zerspanungswerkzeugs, eines Werkzeugvermessungsdatensatzes des Zerspanungswerkzeugs und/oder eines Werkzeugprozessdatensatzes des Zerspanungswerkzeugs an eine Computerized Numerical Control-gesteuerte Werkzeugmaschine (CNC-Werkzeugmaschine) mit einer Datenkommunikationseinheit nach dem Oberbegriff des Anspruchs 1 und einer Kommunikationsvorrichtung nach dem Oberbegriff des Anspruch 8.

Es ist bereits vorgeschlagen worden, dass in einem Werkzeuganlieferungsschritt zumindest das Zerspanungswerkzeug an die CNC-Werkzeugmaschine angeliefert wird und dass in einem Werkzeugidentifikationsschritt das angelieferte Zerspanungswerkzeug mittels einer Werkzeugidentifikationseinheit identifiziert wird.

In der EP 2 664 973 A2 ist ein Verfahren zur Verwaltung von Werkzeugdaten beschrieben, bei welchem eine zentrale Datenverwaltungseinrichtung die Messdaten von Werkzeugen an Werkzeugmaschinen weiterleitet oder bei welchem alternativ die Messdaten in Form von z.B. angeklebten RFID-Chips oder Barcode-Etiketten mit dem jeweiligen Werkzeug mitbewegt werden.

In der DE 10 2006 024 904 A1 ist ein Verfahren zum Bereitstellen von Werkzeugen beschrieben, bei welchem Werkzeugwägen mit eingebauten Recheneinheiten zur Führung von Werkzeugwagen-Werkzeuginventarlisten ausgestattet werden.

In der DE 200 10 529 U1 ist ein Steuerungssystem für einen Bewegungsablauf eines Werkzeugs eines Operationsroboters für chirurgische Operationen beschrieben, bei welchem die verwendeten Werkzeuge mit eineindeutigen Codierungen versehen sind, um eine Verwechslung zu vermeiden.

In der Veröffentlichung "Abschlussbericht zum Verbundprojekt ToolCloud:
Unternehmensübergreifendes Lebenszyklusmanagement für Werkzeuge in der Cloud mittels eindeutiger Kennzeichnung und Identifikation" von M. Röschinger et al. ist ein vollständig cloudbasiertes Werkzeugverwaltungssystem beschrieben, bei welchem über die Cloud Messdaten von Werkzeugen ausgetauscht werden können.

Die Aufgabe der Erfindung besteht insbesondere darin, ein gattungsgemäßes Verfahren mit einem hohen Automatisierungsgrad bereitzustellen. Die Aufgabe wird erfindungsgemäß durch die Merkmale der Patentansprüche 1 und 8 gelöst, während vorteilhafte Ausgestaltungen und Weiterbildungen der Erfindung den Unteransprüchen entnommen werden können.

### Vorteile der Erfindung

Die Erfindung geht aus von einem Verfahren zu einer Übermittlung zumindest eines auf einem elektronischen Speichermedium abgespeicherten Werkzeugeinstellungsdatensatzes eines Zerspanungswerkzeugs, eines Werkzeugvermessungsdatensatzes des Zerspanungswerkzeugs und/oder eines Werkzeugprozessdatensatzes des Zerspanungswerkzeugs an eine Computerized Numerical Control-gesteuerte Werkzeugmaschine (CNC-Werkzeugmaschine), mit einer Datenkommunikationseinheit, wobei in einem Werkzeuganlieferungsschritt zumindest das Zerspanungswerkzeug an die CNC-Werkzeugmaschine angeliefert wird und wobei in einem Werkzeugidentifikationsschritt das angelieferte Zerspanungswerkzeug mittels einer, insbesondere der CNC-Werkzeugmaschine zugeordneten, Werkzeugidentifikationseinheit identifiziert wird.

Es wird vorgeschlagen, dass ein Ausleseschritt, welcher insbesondere zeitlich nach dem Werkzeugidentifikationsschritt liegt, in dem zumindest der Werkzeugeinstellungsdatensatz des Zerspanungswerkzeugs, der Werkzeugvermessungsdatensatz des Zerspanungswerkzeugs und/oder der Werkzeugprozessdatensatz des Zerspanungswerkzeugs von der Datenkommunikationseinheit aus dem Speichermedium ausgelesen und an eine der CNC-Werkzeugmaschine zugeordnete Datenverarbeitungseinheit, insbesondere an die CNC-Werkzeugmaschine, übermittelt wird, wobei das Speichermedium getrennt von dem Zerspanungswerkzeug, getrennt von einer das Zerspanungswerkzeug halternden Werkzeugaufnahme und getrennt von der CNC-Werkzeugmaschine angeordnet ist. Vorzugsweise wird in zumindest einem Verfahrensschritt ein Werkzeugdatensatz auf dem Speichermedium hinterlegt, um ihn in einem, insbesondere späteren, Verfahrensschritt an die CNC-Werkzeugmaschine, insbesondere an die der CNC-Werkzeugmaschine zugeordnete Datenverarbeitungseinheit, zu übermitteln. Vorzugsweise ist das Speichermedium als elektronisches Speichermedium ausgebildet, beispielsweise als Datenchip, Festplatte, Flash-Speicher, Solid-State-Drive o. dgl. Vorzugsweise ist das Speichermedium als nicht-flüchtiger Speicher ausgebildet. Vorzugsweise handelt es sich bei dem Werkzeugdatensatz um den Werkzeugeinstellungsdatensatz, um den Werkzeugvermessungsdatensatz und/oder um den Werkzeugprozessdatensatz. Vorzugsweise ist dem Werkzeugdatensatz ein eindeutiges Datenidentifikationsmerkmal, insbesondere ein Datenidentifikationszeichenstrang und/oder eine laufende Datennummerierung, zugeordnet. Vorzugsweise umfasst der Werkzeugvermessungsdatensatz zumindest eine Information über eine Form des Zerspanungswerkzeugs, insbesondere einen Radius, einen Durchmesser, einen Winkel einer Schneide zu einer Längsachse des Zerspanungswerkzeugs o.dgl. Vorzugsweise ist die Werkzeugaufnahme dazu vorgesehen, zusammen mit dem Zerspanungswerkzeug in die CNC-Werkzeugmaschine eingesetzt zu werden. Vorzugsweise umfasst der Werkzeugeinstellungsdatensatz zumindest eine Information über eine Konfiguration des, insbesondere mehrkomponentigen, Zerspanungswerkzeugs und/oder eine relative Position des Zerspanungswerkzeugs zu der das Zerspanungswerkzeug haltenden Werkzeugaufnahme, beispielsweise eine Drehmitte und/oder eine Spitzenhöhe. Vorzugsweise umfasst der Werkzeugprozessdatensatz zumindest eine Information über eine Standzeit, insbesondere eine verbleibende Standzeit, ein Gewicht, eine Härte und/oder ein Material des Zerspanungswerkzeugs.

Vorzugsweise wird in dem Werkzeuganlieferungsschritt das Zerspanungswerkzeug, insbesondere von einem Vorbereitungs-, Wartungs- und/oder Lagerbereich, zu der CNC-Werkzeugmaschine transportiert. Vorzugsweise wird das Zerspanungswerkzeug in einem in der Werkzeugaufnahme montierten Zustand zu der CNC-Werkzeugmaschine transportiert. Vorzugsweise ist das Speichermedium mobil ausgebildet. Vorzugsweise wird das Speichermedium in dem Werkzeuganlieferungsschritt zu der CNC-Werkzeugmaschine, insbesondere zu der der CNC-Werkzeugmaschine zugeordneten Datenverarbeitungseinheit, transportiert. Es ist aber auch denkbar, dass das Speichermedium stationär ausgebildet ist, beispielsweise als zentraler Server.

Erfindungsgemäß wird in dem Werkzeugidentifikationsschritt dem Zerspanungswerkzeug mittels der Werkzeugidentifikationseinheit ein eindeutiges Werkzeugidentifikationsmerkmal, insbesondere ein Werkzeugidentifikationszeichenstrang und/oder eine laufende Werkzeugnummerierung, erfasst. Vorzugsweise wird das erfasste Werkzeugidentifikationsmerkmal an die Datenverarbeitungseinheit und/oder das Speichermedium übermittelt. Vorzugsweise weist die Werkzeugidentifikationseinheit zumindest ein Scanelement zu einem Erfassen des Werkzeugidentifikationsmerkmals auf. Insbesondere ist das Scanelement zu einem Einlesen einer optischen Ausgestaltung des Werkzeugidentifikationsmerkmals, beispielsweise eines Strichcodes, eines Datamatrix-Etiketts o. dgl., des Zerspanungswerkzeugs und/oder der das Zerspanungswerkzeug haltende Werkzeugaufnahme vorgesehen. Vorzugsweise erfolgt eine Identifikation des Zerspanungswerkzeugs indirekt über eine Identifikation der das Zerspanungswerkzeug haltenden Werkzeugaufnahme. Vorzugsweise ist das Werkzeugidentifikationsmerkmal stoffschlüssig an dem Zerspanungswerkzeug und/oder an der Werkzeugaufnahme befestigt, beispielsweise aufgeklebt, eingeritzt, eingebrannt, aufgedruckt, eingepresst o. dgl. Vorzugsweise ist das Scanelement als Handscanner ausgebildet. Es ist aber auch denkbar, dass das Scanelement als stationäre Scanner ausgebildet ist, insbesondere in die CNC-Werkzeugmaschine integriert ist. Vorzugsweise ist die Werkzeugidentifikationseinheit der CNC-Werkzeugmaschine zugeordnet, insbesondere an der CNC-Werkzeugmaschine anschließbar und/oder fest mit der CNC-Werkzeugmaschine verbunden. Alternativ weist die Datenkommunikationseinheit zumindest eine Datenkommunikationsschnittstelle zu einer Kommunikation der Werkzeugidentifikationseinheit mit der der CNC-Werkzeugmaschine zugeordneten Datenverarbeitungseinheit auf.

Vorzugsweise wird in dem Ausleseschritt das mit der Werkzeugidentifikationseinheit erfasste Werkzeugidentifikationsmerkmal mit dem Datenidentifikationsmerkmal in dem Speichermedium abgeglichen. Vorzugsweise wird in dem Ausleseschritt zumindest ein zu dem Werkzeugidentifikationsmerkmal zugehöriger Werkzeugdatensatz von dem Speichermedium mittels der Datenkommunikationseinheit ausgelesen. Vorzugsweise wird in dem Ausleseschritt der ausgelesene Werkzeugdatensatz an die Datenverarbeitungseinheit mittels der Datenkommunikationseinheit übermittelt. Vorzugsweise weist die Datenverarbeitungseinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Insbesondere ist die Datenverarbeitungseinheit dazu vorgesehen, den übermittelten Datensatz zu einer auf das identifizierte Zerspanungswerkzeug abgestimmte Steuerung und/oder Regelung der CNC-Werkzeugmaschine auszuwerten. Vorzugsweise ist die Datenverarbeitungseinheit in die CNC-Werkzeugmaschine integriert. Es ist aber auch denkbar, dass die Datenverarbeitungseinheit getrennt von der CNC-Werkzeugmaschine ausgebildet ist. Vorzugsweise erfolgt eine Übermittlung des Werkzeugdatensatzes von dem Speichermedium zu der Datenverarbeitungseinheit drahtlos. Es ist auch vorstellbar, dass der Werkzeugdatensatzes von dem Speichermedium zu der Datenverarbeitungseinheit leitungsgebunden, insbesondere per USB-Schnittstelle der Datenkommunikationseinheit, per Ethernet-Schnittstelle der Datenkommunikationseinheit und/oder per serieller Schnittstelle der Datenkommunikationseinheit, insbesondere per RS-232, übermittelt wird. Es ist insbesondere vorstellbar, dass das Speichermedium, insbesondere während des Werkzeuganlieferungsschritts, in einem Aufnahmeelement, insbesondere an einem Andockelement, der Datenkommunikationseinheit an der Datenverarbeitungseinheit und/oder an der CNC-Werkzeugmaschine angeordnet wird, insbesondere eingerastet wird.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung des Verfahrens kann eine vorteilhaft zuverlässige Versorgung der CNC-Werkzeugmaschine mit Werkzeugdatensätzen über das verwendete Zerspanungswerkzeug erreicht werden. Insbesondere kann auf ein Erstellen von papiergebundenen und/oder gedruckten Werkzeugdatensätzen verzichtet werden. Insbesondere kann ein Verwechselungsrisiko von Werkzeugdatensätzen und/oder ein Eingabefehlerrisiko bei einer Übermittlung vorteilhaft gering gehalten werden.

Erfindungsgemäß wird der Ausleseschritt durch den Werkzeugidentifikationsschritt automatisch ausgelöst. Vorzugsweise wird der Ausleseschritt durch eine Übermittlung des erfassten Werkzeugidentifikationsmerkmals von der Werkzeugidentifikationseinheit automatisch ausgelöst. Erfindungsgemäß wird der Ausleseschritt, insbesondere mit einer Fehlermeldung, automatisch abgebrochen, wenn ein Abgleich des Werkzeugidentifikationsmerkmals mit dem Datenidentifikationsmerkmal negativ ausfällt. Es ist insbesondere denkbar, dass vor der Übermittlung des erfassten Werkzeugidentifikationsmerkmals das erfasste Werkzeugidentifikationsmerkmal mittels der Werkzeugidentifikationseinheit zumindest bezüglich einer Teilübereinstimmung mit einem Datenformat für das Werkzeugidentifikationsmerkmal und/oder mit einer Liste bekannter Werkzeugidentifikationsmerkmale abgeglichen wird. Es ist insbesondere denkbar, dass bei einer Teilübereinstimmung eine Benutzereingabe abgefragt wird, beispielsweise zur Wiederholung des Werkzeugidentifikationsschritts und/oder zu einer manuellen Auswahl aus teilweise mit dem Werkzeugidentifikationsmerkmal übereinstimmenden Datenidentifikationsmerkmalen. Vorzugsweise werden bei einem positiven, insbesondere eindeutigen, Abgleich des Werkzeugidentifikationsmerkmals mit dem Datenidentifikationsmerkmal, zumindest ein zugehöriger Werkzeugdatensatz automatisch von dem Speichermedium zu der Datenverarbeitungseinheit übertragen. Durch die erfindungsgemäße Ausgestaltung kann eine Anzahl an manuell durchzuführenden Verfahrensschritten bei einer Bestückung der CNC-Werkzeugmaschine mit dem Zerspanungswerkzeug vorteilhaft gering gehalten werden. Insbesondere kann eine Durchlaufzeit für die Bestückung der CNC-Werkzeugmaschine mit dem Zerspanungswerkzeug vorteilhaft gering gehalten werden.

Erfindungsgemäß ist das Speichermedium zumindest während des Werkzeuganlieferungsschritts an einem Werkzeugwagen zu einer Anlieferung des Zerspanungswerkzeugs an die CNC-Werkzeugmaschine angeordnet. Vorzugsweise wird das Zerspanungswerkzeug während des Werkzeuganlieferungsschritts mittels eines Werkzeugtransportmittels zu der CNC-Werkzeugmaschine transportiert. Vorzugsweise ist das Werkzeugtransportmittel als Werkzeugwagen ausgebildet. Es ist auch denkbar, dass das Werkzeugtransportmittel als Werkzeugkoffer, als Werkzeugtablett, als Werkzeugtrommel, als Transportschale einer Förderbandvorrichtung, als Transportdrohne o. dgl. ausgebildet ist. Vorzugsweise ist das Speichermedium in das Werkzeugtransportmittel fest integriert. Alternativ weist das Werkzeugtransportmittel ein Aufnahmeelement zu einer Aufnahme und/oder Ablage des Speichermediums zumindest während des Werkzeuganlieferungsschritts auf. Durch die erfindungsgemäße Ausgestaltung kann das Speichermedium vorteilhaft gemeinsam mit dem Zerspanungswerkzeug, insbesondere von einem Vorbereitungs-, Wartungs- und/oder Lagerbereich, zu der CNC-Werkzeugmaschine transportiert werden. Insbesondere können lange Kommunikationswege zwischen dem Speichermedium und der CNC-Werkzeugmaschine und/oder der Datenverarbeitungseinheit vermieden werden.

Insbesondere können Installationskosten für lange Datenleitungen zwischen dem Speichermedium und der CNC-Werkzeugmaschine und/oder der

Datenverarbeitungseinheit vorteilhaft vermieden werden. Insbesondere kann eine Signalstärke von drahtlosen Datenkommunikationsschnittstellen der Datenkommunikationseinheit zwischen dem Speichermedium und der CNC-Werkzeugmaschine und/oder der Datenverarbeitungseinheit vorteilhaft gering gehalten werden. Insbesondere kann eine vorteilhaft hohe elektromagnetische Verträglichkeit erreicht werden.

Des Weiteren wird vorgeschlagen, dass in dem Ausleseschritt der Werkzeugeinstellungsdatensatz des Zerspanungswerkzeugs, der Werkzeugvermessungsdatensatz des Zerspanungswerkzeugs und/oder der Werkzeugprozessdatensatz des Zerspanungswerkzeugs mittels einer drahtlosen Datenkommunikationsschnittstelle der Datenkommunikationseinheit übertragen wird. Insbesondere wird der Werkzeugeinstellungsdatensatz, der Werkzeugvermessungsdatensatz und/oder der Werkzeugprozessdatensatz mittels der drahtlosen Datenkommunikationsschnittstelle zwischen dem, insbesondere an dem Werkzeugtransportmittel angeordneten, Speichermedium und der Datenverarbeitungseinheit übertragen. Durch die erfindungsgemäße Ausgestaltung kann das Speichermedium vorteilhaft frei beweglich relativ zu der Datenverarbeitungseinheit gestaltet werden. Insbesondere kann das Speichermedium vorteilhaft einfach zwischen verschiedenen Bereichen, insbesondere einem Arbeitsbereich, einem Vorbereitungsbereich und/oder einem Wartungs- und/oder Lagerbereich, transportiert werden. Insbesondere können die auf dem Speichermedium gespeicherten Werkzeugdatensätze, insbesondere der Werkzeugeinstellungsdatensatz, der Werkzeugvermessungsdatensatz und/oder der Werkzeugprozessdatensatz, vorteilhaft einfach zwischen den verschiedenen Bereichen ausgetauscht werden.

Darüber hinaus wird vorgeschlagen, dass in dem Ausleseschritt zur Übertragung des Werkzeugeinstellungsdatensatzes des Zerspanungswerkzeugs, des Werkzeugvermessungsdatensatzes des Zerspanungswerkzeugs und/oder des Werkzeugprozessdatensatzes des Zerspanungswerkzeugs eine Bluetooth-Schnittstelle der drahtlosen Datenkommunikationsschnittstelle und/oder eine WLAN-Schnittstelle der drahtlosen Datenkommunikationsschnittstelle aktiviert wird. Insbesondere stellen/stellt die Bluetooth-Schnittstelle und/oder die WLAN-Schnittstelle eine Datenverbindung zwischen dem Speichermedium und der Datenverarbeitungseinheit her. Vorzugsweise sind/ist die Bluetooth-Schnittstelle und/oder die WLAN-Schnittstelle an dem Werkzeugtransportmittel und/oder der Datenverarbeitungseinheit angeordnet. Durch die erfindungsgemäße Ausgestaltung kann ein Werkzeugdatensatz über einen vorteilhaft großen Abstand zwischen dem Speichermedium und der Datenverarbeitungseinheit übermittelt werden. Insbesondere kann auf eine genaue Positionierung des Speichermediums in einem Auslesebereich der Datenverarbeitungseinheit verzichtet werden. Insbesondere kann das Speichermedium, insbesondere das Werkzeugtransportmittel zusammen mit dem Speichermedium, vorteilhaft flexibel in einem Arbeitsbereich und/oder einem Vorbereitungsbereich, insbesondere zu einer vorteilhaft bequemen Handhabung und/oder in einer vorteilhaft kurzen Zeitspanne, angeordnet werden.

Ferner wird vorgeschlagen, dass zumindest in dem Ausleseschritt zur Übertragung des Werkzeugeinstellungsdatensatzes des Zerspanungswerkzeugs, des Werkzeugvermessungsdatensatzes des Zerspanungswerkzeugs und/oder des Werkzeugprozessdatensatzes des Zerspanungswerkzeugs das Speichermedium und/oder die Datenkommunikationseinheit einen USB-Massenspeicher emuliert. Insbesondere soll unter "USB" das Bussystem Universal Serial Bus verstanden werden. Insbesondere speichert das Speichermedium den Werkzeugeinstellungsdatensatz des Zerspanungswerkzeugs, den Werkzeugvermessungsdatensatz des Zerspanungswerkzeugs und/oder den Werkzeugprozessdatensatz des Zerspanungswerkzeugs in dem emulierten USB-Massenspeicher ab. Vorzugsweise überträgt die Datenkommunikationseinheit in dem Ausleseschritt den Werkzeugeinstellungsdatensatz des Zerspanungswerkzeugs, den Werkzeugvermessungsdatensatz des Zerspanungswerkzeugs und/oder den Werkzeugprozessdatensatz des Zerspanungswerkzeugs in dem emulierten USB-Massenspeicher des Speichermediums an eine USB-Schnittstelle der Datenverarbeitungseinheit, insbesondere an eine USB-Schnittstelle der CNC-Werkzeugmaschine. Vorzugsweise teilt das Speichermedium den Werkzeugeinstellungsdatensatz des Zerspanungswerkzeugs, den Werkzeugvermessungsdatensatz des Zerspanungswerkzeugs und/oder den Werkzeugprozessdatensatz des Zerspanungswerkzeugs in dem emulierten USB-Massenspeicher in Datenpakete ein. Insbesondere weist ein Datenpaket eine Größe auf, welche auf eine Datenverarbeitungskapazität der Datenverarbeitungseinheit, insbesondere der CNC-Werkzeugmaschine, abgestimmt ist. Vorzugsweise wird auf dem emulierten USB-Massenspeicher ein Datenpaket pro Ausleseschritt abgespeichert. Insbesondere werden Datenpakete in aufeinander folgenden Ausleseschritten nach und nach von dem Speichermedium in den emulierten USB-Massenspeicher gespeichert und an die Datenverarbeitungseinheit, insbesondere an die CNC-Werkzeugmaschine, übermittelt. Durch die erfindungsgemäße Ausgestaltung können/kann die CNC-Werkzeugmaschine und/oder die der CNC-Werkzeugmaschine zugeordnete Datenverarbeitungseinheit vorteilhaft einfach und/oder vorteilhaft zuverlässig mit dem Speichermedium zu einer Kommunikation verbunden werden. Insbesondere kann vorteilhaft auf eine aufwendige und/oder fehleranfällige Konfiguration der CNC-Werkzeugmaschine und/oder der Datenverarbeitungseinheit zu einer Kommunikation mit dem Speichermedium verzichtet werden.

Weiterhin umfasst das erfindungsgemäße Verfahren zumindest einen Verfahrensschritt, in dem zumindest der Werkzeugeinstellungsdatensatz des Zerspanungswerkzeugs, der Werkzeugvermessungsdatensatz des Zerspanungswerkzeugs und/oder der Werkzeugprozessdatensatz des Zerspanungswerkzeugs von einem Werkzeugeinstell- und/oder Werkzeugmessgerät ermittelt und/oder erstellt wird und durch einen Eingabeschritt, in dem der ermittelte Werkzeugeinstellungsdatensatz des Zerspanungswerkzeugs, der ermittelte Werkzeugvermessungsdatensatz des Zerspanungswerkzeugs und/oder der ermittelte Werkzeugprozessdatensatz des Zerspanungswerkzeugs, insbesondere drahtlos, an das Speichermedium übertragen wird und in dem Speichermedium abgespeichert wird. Vorzugsweise wird in einem Vorbereitungsschritt das Zerspanungswerkzeug an der Werkzeugaufnahme befestigt. Erfindungsgemäß wird während des Vorbereitungsschritts das Werkzeugidentifikationsmerkmal von dem Zerspanungswerkzeug und/oder von der Werkzeugaufnahme mittels einer weiteren Werkzeugidentifikationseinheit, welche insbesondere dem Werkzeugeinstell- und/oder Werkzeugmessgerät und/oder dem Werkzeugtransportmittel zugeordnet ist, erfasst. Vorzugsweise wird das Werkzeugidentifikationsmerkmal während des Vorbereitungsschritts an das Speichermedium und/oder an das Werkzeugeinstell- und/oder Werkzeugmessgerät übermittelt. Vorzugsweise wird in zumindest einem Verfahrensschritt das Zerspanungswerkzeug, insbesondere gemeinsam mit der Werkzeugaufnahme, mittels des Werkzeugeinstell- und/oder Werkzeugmessgeräts vermessen und/oder eingestellt. Vorzugsweise wird während eines Vermessens und/oder Einstellens des Zerspanungswerkzeugs durch das Werkzeugeinstell- und/oder Werkzeugmessgerät der Werkzeugeinstellungsdatensatz, der Werkzeugvermessungsdatensatz und/oder der Werkzeugprozessdatensatz ermittelt oder erstellt. Erfindungsgemäß wird dem Werkzeugeinstellungsdatensatz, dem Werkzeugvermessungsdatensatz und/oder dem Werkzeugprozessdatensatz das, insbesondere in dem Vorbereitungsschritt, erfasste Werkzeugidentifikationsmerkmal als Datenidentifikationsmerkmal zugeordnet. Es ist denkbar, dass ein Erfassen des Werkzeugidentifikationsmerkmals vor, nach und/oder während eines Vermessens und/oder Einstellens des Zerspanungswerkzeugs durch das Werkzeugeinstell- und/oder Werkzeugmessgerät ausgeführt wird. Vorzugsweise wird dem Eingabeschritt der Werkzeugeinstellungsdatensatz, der Werkzeugvermessungsdatensatz und/oder der Werkzeugprozessdatensatz, insbesondere gemeinsam mit dem Werkzeugidentifikationsmerkmal, insbesondere als Datenidentifikationsmerkmal, an das Speichermedium übertragen. Vorzugsweise erfolgt eine Übertragung von dem Werkzeugeinstell- und/oder Werkzeugmessgerät zu dem Speichermedium über eine drahtlose Datenkommunikationsschnittstelle, insbesondere über eine Bluetooth-Schnittstelle und/oder eine WLAN-Schnittstelle, der Datenkommunikationseinheit. Vorzugsweise wird nach dem Eingabeschritt das Zerspanungswerkzeug und/oder das Speichermedium zu einem Transport zu der CNC-Werkzeugmaschine vorbereitet, beispielsweise verpackt, an dem Transportmittel angeordnet, in eine Sammlung weiterer Zerspanungswerkzeuge einsortiert o. dgl. Durch die erfindungsgemäße Ausgestaltung kann eine vorteilhaft zuverlässige Handhabung von erfassten und/oder ermittelten Werkzeugdatensätzen über das vermessene und/oder eingestellte Zerspanungswerkzeug erreicht werden. Insbesondere kann auf ein Erstellen von papiergebundenen und/oder gedruckten Werkzeugdatensätzen verzichtet werden. Insbesondere kann ein Verwechslungsrisiko von Werkzeugdatensätzen vorteilhaft gering gehalten werden.

Ferner wird vorgeschlagen, dass von dem Speichermedium Werkzeugeinstellungsdatensätze, Werkzeugvermessungsdatensätze und/oder Werkzeugprozessdatensätze einer Mehrzahl an Zerspanungswerkzeugen abgespeichert werden. Vorzugsweise wird zumindest ein Werkzeugeinstellungsdatensatz, ein Werkzeugvermessungsdatensatz und/oder ein Werkzeugprozessdatensatz zumindest zweier, vorzugsweise aller, Zerspanungswerkzeuge in dem Speichermedium abgespeichert, die während des Werkzeuganlieferungsschritts, insbesondere von dem Werkzeugeinstell- und/oder Werkzeugmessgerät kommend, gemeinsam an die CNC-Werkzeugmaschine angeliefert werden. Vorzugsweise wird zumindest ein Werkzeugeinstellungsdatensatz, ein Werkzeugvermessungsdatensatz und/oder ein Werkzeugprozessdatensatz zumindest zweier, vorzugsweise aller, Zerspanungswerkzeuge in dem Speichermedium abgespeichert, die während des Werkzeuganlieferungsschritts an dem Werkzeugtransportmittel angeordnet sind. Durch die erfindungsgemäße Ausgestaltung können mehrere Zerspanungswerkzeuge vorteilhaft einfach verwaltet werden. Insbesondere kann auf eine Vielzahl an Speichermedien verzichtet werden. Insbesondere kann ein Verwechslungsrisiko von Zerspanungswerkzeug und Speichermedium mit den zugehörigen Werkzeugdatensätzen vorteilhaft gering gehalten werden.

Weiter wird vorgeschlagen, dass das Speichermedium eine Datenbank aufweist, wobei dem ermittelten Werkzeugeinstellungsdatensatz des Zerspanungswerkzeugs, dem ermittelten Werkzeugvermessungsdatensatz des Zerspanungswerkzeugs und/oder dem ermittelten Werkzeugprozessdatensatz des Zerspanungswerkzeugs in dem Eingabeschritt eindeutig ein passendes Zerspanungswerkzeug in der Datenbank zugeordnet wird. Vorzugsweise umfasst die Datenbank einen weiteren Werkzeugeinstellungsdatensatz, einen weiteren Werkzeugvermessungsdatensatz und/oder einen weiteren Werkzeugprozessdatensatz. Beispielsweise enthalten/enthält der weitere Werkzeugeinstellungsdatensatz, der weitere Werkzeugvermessungsdatensatz und/oder der weitere Werkzeugprozessdatensatz in einem vorherigen Durchlauf des Verfahrens gemessenen und/oder eingestellt Werte, insbesondere eine Historie von Werten und/oder einen Mittelwert von Werten, und/oder Herstellerangaben. Vorzugsweise wird in dem Eingabeschritt ein aktuell vermessenes und/oder eingestelltes Zerspanungswerkzeug mit der Datenbank abgeglichen, insbesondere einem Eintrag der Datenbank eindeutig zugeordnet. Vorzugweise werden während des Eingabeschritts fehlende Werte des aktuellen Werkzeugeinstellungsdatensatzes, des aktuellen Werkzeugvermessungsdatensatzes und/oder des aktuellen Werkzeugprozessdatensatzes um die entsprechenden Werte des weiteren Werkzeugeinstellungsdatensatz, des weiteren Werkzeugvermessungsdatensatz und/oder des weiteren Werkzeugprozessdatensatz ergänzt. Es ist denkbar, dass die Datenbank während des Eingabeschritts mittels des aktuellen Werkzeugeinstellungsdatensatzes, des aktuellen Werkzeugvermessungsdatensatzes und/oder des aktuellen Werkzeugprozessdatensatzes, insbesondere automatisch, aktualisiert wird. Durch die erfindungsgemäße Ausgestaltung kann das Speichermedium einen vorteilhaft großen Informationsgehalt über das Zerspanungswerkzeug abspeichern. Insbesondere kann an die CNC-Werkzeugmaschine, insbesondere an die Datenverarbeitungseinheit, eine vorteilhaft große Informationsfülle über das Zerspanungswerkzeug übermittelt werden.

Darüber hinaus wird vorgeschlagen, dass das Verfahren zumindest einen Zuordnungsschritt aufweist, in welchem dem Zerspanungswerkzeug eine CNC-Werkzeugmaschine, insbesondere eine Aufgabe innerhalb der CNC-Werkzeugmaschine und/oder ein Werkzeugmagazinplatz innerhalb der CNC-Werkzeugmaschine, zugeordnet wird. Vorzugsweise erfolgt eine Zuordnung einer CNC-Werkzeugmaschine, insbesondere eine Aufgabe innerhalb der CNC-Werkzeugmaschine und/oder ein Werkzeugmagazinplatz innerhalb der CNC-Werkzeugmaschine, mittels des Werkzeugeinstell- und/oder Werkzeugmessgeräts. Es ist aber auch vorstellbar, dass die Datenkommunikationseinheit eine getrennt von dem Werkzeugeinstell- und/oder Werkzeugmessgerät ausgebildete Benutzerschnittstelle zur Durchführung des Zuordnungsschritts aufweist. Vorzugsweise erfolgt der Zuordnungsschritt vor dem Werkzeuganlieferungsschritt. Vorzugsweise wird die Zuordnung der CNC-Werkzeugmaschine, insbesondere der Aufgabe innerhalb der CNC-Werkzeugmaschine und/oder der Werkzeugmagazinplatz innerhalb der CNC-Werkzeugmaschine, zusammen mit dem Werkzeugeinstellungsdatensatz, dem Werkzeugvermessungsdatensatz und/oder dem weiteren Werkzeugprozessdatensatz in dem Speichermedium abgespeichert. Durch die erfindungsgemäße Ausgestaltung kann ein vorteilhaft rückverfolgbarer Ablauf des Verfahrens realisiert werden. Insbesondere ist ein vorgesehener Aufenthaltsort des Zerspanungswerkzeugs in jedem Verfahrensschritt bekannt. Insbesondere kann, beispielsweise bei einer Fehlproduktion, das verantwortliche Zerspanungswerkzeug vorteilhaft schnell identifiziert werden.

Des Weiteren wird vorgeschlagen, dass die Zuordnung zu der CNC-Werkzeugmaschine, insbesondere der Aufgabe innerhalb der CNC-Werkzeugmaschine und/oder dem Werkzeugmagazinplatz innerhalb der CNC-Werkzeugmaschine, in dem Ausleseschritt aus dem Speichermedium ausgelesen und an die der CNC-Werkzeugmaschine zugeordnete Datenverarbeitungseinheit, insbesondere an die CNC-Werkzeugmaschine, übermittelt wird. Vorzugsweise wird die Zuordnung zu der CNC-Werkzeugmaschine vor dem Werkzeugeinstellungsdatensatz, dem Werkzeugvermessungsdatensatz und/oder dem Werkzeugprozessdatensatz ausgelesen. Vorzugsweise werden in einer Startphase des Ausleseschritts alle Datenidentifikationsmerkmale ausgelesen, die mit je einer Zuordnung zu der CNC-Maschine gemeinsam abgespeichert sind. Insbesondere werden Datenidentifikationsmerkmale, die mit einer Zuordnung zu einer weiteren CNC-Maschine verknüpft sind übersprungen. Vorzugsweise werden die ausgelesenen Datenidentifikationsmerkmale an die Werkzeugidentifikationseinheit übertragen. Es ist insbesondere denkbar, dass die Datenidentifikationsmerkmale, die mit je einer Zuordnung zu der CNC-Maschine gemeinsam abgespeichert sind, vor einem ersten Werkzeugidentifikationsschritt automatisch ausgelesen werden, beispielsweise ausgelöst durch einen Annäherungssensor und/oder durch einen Eintritt in die Reichweite der drahtlosen Datenkommunikationsschnittstelle. Vorzugsweise wird in dem Ausleseschritt die Aufgabe innerhalb der CNC-Werkzeugmaschine und/oder der Werkzeugmagazinplatz innerhalb der CNC-Werkzeugmaschine nach einer erfolgreichen Identifikation des, insbesondere der CNC-Maschine zugeordneten, Zerspanungswerkzeugs gemeinsam mit dem Werkzeugeinstellungsdatensatz, dem Werkzeugvermessungsdatensatz und/oder dem Werkzeugprozessdatensatz an die Datenverarbeitungseinheit übermittelt. Durch die erfindungsgemäße Ausgestaltung kann eine auf den Ausleseschritt folgende Bestückung der CNC-Werkzeugmaschine mit dem Zerspanungswerkzeug vorteilhaft schnell gestaltet werden. Insbesondere kann eine Auswertung der Werkzeugdatensätze, der zugeordneten Aufgabe und/oder dem zugeordneten Werkzeugmagazinplatz durch die Datenverarbeitungseinheit unmittelbar nach der Übermittlung beginnen. Insbesondere kann eine Bestückung der CNC-Werkzeugmaschine mit dem Zerspanungswerkzeug unmittelbar nach dem Identifizierungsschritt beginnen. Insbesondere entfällt vorteilhaft eine manuelle Eingabe während des Ausleseschritts zu einer Zuordnung einer Aufgabe und/oder eines Werkzeugmagazinplatzes.

Weiterhin wird vorgeschlagen, dass das Verfahren einen Abgleichschritt aufweist, in welchem zumindest eine Plausibilität einer in dem Zuordnungsschritt vorgenommenen Zuordnung und/oder zumindest eine Kompatibilität eines in dem Werkzeuganlieferungsschritt an die CNC-Werkzeugmaschine angelieferten Zerspanungswerkzeugs mit der entsprechenden CNC-Werkzeugmaschine abgeglichen wird. Vorzugsweise überprüft die Datenverarbeitungseinheit die Plausibilität der vorgenommenen Zuordnung, insbesondere die Kompatibilität, des angelieferten Zerspanungswerkzeugs mit der CNC-Werkzeugmaschine, insbesondere der Aufgabe innerhalb der CNC-Werkzeugmaschine und/oder den Werkzeugmagazinplatz innerhalb der CNC-Werkzeugmaschine. Vorzugsweise überprüft die Datenverarbeitungseinheit die Plausibilität der vorgenommenen Zuordnung, insbesondere die Kompatibilität anhand eines Abgleichs des Werkzeugeinstellungsdatensatzes, des Werkzeugvermessungsdatensatzes und/oder des Werkzeugprozessdatensatzes mit aktuellen Zustandsinformationen der CNC-Werkzeugmaschine, in der Datenverarbeitungseinheit hinterlegten Herstellerangaben der CNC-Werkzeugmaschine und/oder in die Datenverarbeitungseinheit einprogrammierten Projektdaten, insbesondere Werkstückdaten. Durch die erfindungsgemäße Ausgestaltung kann vorteilhaft frühzeitig eine Fehlzuordnung erkannt werden. Insbesondere kann ein Verschleiß, insbesondere aufgrund einer Fehlzuordnung, des Zerspanungswerkzeugs und/oder der CNC-Werkzeugmaschine vorteilhaft gering gehalten werden.

Ferner geht die Erfindung aus von einer Kommunikationsvorrichtung zu einer Übermittlung zumindest eines mittels einem Werkzeugeinstell- und/oder Werkzeugmessgerät ermittelten Werkzeugeinstellungsdatensatzes eines Zerspanungswerkzeugs, eines Werkzeugvermessungsdatensatzes des Zerspanungswerkzeugs und/oder eines Werkzeugprozessdatensatzes des Zerspanungswerkzeugs an eine Computerized Numerical Control-gesteuerte Werkzeugmaschine (CNC-Werkzeugmaschine), insbesondere zu einer Durchführung des erfindungsgemäßen Verfahrens, mit einer, insbesondere der CNC-Werkzeugmaschine zugeordneten, Werkzeugidentifikationseinheit, mit einem, insbesondere elektronischen, Speichermedium, welches dazu vorgesehen ist, zumindest den Werkzeugeinstellungsdatensatz des Zerspanungswerkzeugs, zumindest den Werkzeugvermessungsdatensatz des Zerspanungswerkzeugs und/oder zumindest den Werkzeugprozessdatensatz des Zerspanungswerkzeugs abzuspeichern, und mit einer Datenkommunikationseinheit. Es wird vorgeschlagen, dass die Datenkommunikationseinheit dazu vorgesehen ist, ausgelöst durch eine Identifikation eines Zerspanungswerkzeugs mittels der Werkzeugidentifikationseinheit zumindest den dem Zerspanungswerkzeug zugehörigen Werkzeugeinstellungsdatensatz, zumindest den dem Zerspanungswerkzeug zugehörigen Werkzeugvermessungsdatensatz und/oder den dem Zerspanungswerkzeug zugehörigen Prozessdatensatz aus dem Speichermedium auszulesen und an die CNC-Werkzeugmaschine zu übertragen. Vorzugsweise ist die Kommunikationsvorrichtung zu einer Verwaltung von Werkzeugdatensätzen, insbesondere des Werkzeugeinstellungsdatensatzes, des Werkzeugprozessdatensatzes und/oder des Werkzeugvermessungsdatensatzes, vorgesehen. Insbesondere ist die Kommunikationsvorrichtung zu einer Ausgabe zumindest eines Werkzeugdatensatzes, insbesondere des Werkzeugeinstellungsdatensatzes, des Werkzeugprozessdatensatzes und/oder des Werkzeugvermessungsdatensatzes, des mit der Werkzeugidentifikationseinheit eindeutig identifizierten Zerspanungswerkzeugs vorgesehen. Insbesondere erfolgen/erfolgt eine Ausgabe eines Werkzeugdatensatzes, insbesondere des Werkzeugeinstellungsdatensatzes, des Werkzeugprozessdatensatzes und/oder des Werkzeugvermessungsdatensatzes, und/oder eine Kommunikation zwischen dem Speichermedium, der Werkzeugidentifikationseinheit und/oder einem externen Gerät mittels der Datenkommunikationseinheit. Vorzugsweise umfasst die Datenkommunikationseinheit zumindest eine drahtlose Datenkommunikationsschnittstelle, insbesondere eine Bluetooth-Schnittstelle und/oder eine WLAN-Schnittstelle. Durch die erfindungsgemäße Ausgestaltung der Kommunikationsvorrichtung kann eine vorteilhaft zuverlässige Versorgung der CNC-Werkzeugmaschine mit Werkzeugdatensätzen über das verwendete Zerspanungswerkzeug erreicht werden. Insbesondere kann auf ein Erstellen von papiergebundenen und/oder gedruckten Werkzeugdatensätzen verzichtet werden. Insbesondere kann ein Verwechselungsrisiko von Werkzeugdatensätzen und/oder ein Eingabefehlerrisiko bei einer Übermittlung vorteilhaft gering gehalten werden.

Weiter wird vorgeschlagen, dass die Kommunikationsvorrichtung ein Werkzeugtransportmittel, insbesondere einen Werkzeugwagen, zu einer Anlieferung des Zerspanungswerkzeugs an die CNC-Werkzeugmaschine umfasst, an welchem das Speichermedium angeordnet ist. Vorzugsweise ist das Speichermedium in dem Werkzeugtransportmittel integriert. Es ist aber auch denkbar, dass das Speichermedium lösbar an dem Werkzeugtransportmittel angeordnet ist. Vorzugsweise ist das Werkzeugtransportmittel als Werkzeugwagen ausgebildet. Vorzugsweise ist zumindest eine Datenkommunikationsschnittstelle, insbesondere eine Bluetooth-Schnittstelle und/oder eine WLAN-Schnittstelle, der Datenkommunikationseinheit in dem Werkzeugtransportmittel integriert, insbesondere zu einer Übermittelung von Werkzeugdatensätzen von dem Speichermedium zu der Datenverarbeitungseinheit. Durch die erfindungsgemäße Ausgestaltung kann eine vorteilhaft kompakte Kommunikationsvorrichtung bereitgestellt werden. Insbesondere ist das Speichermedium vorteilhaft gemeinsam, insbesondere zur gleichen Zeit und insbesondere ohne Zusatzaufwand, mit dem Zerspanungswerkzeug, insbesondere von einem Vorbereitungs-, Wartungs- und/oder Lagerbereich, zu der CNC-Werkzeugmaschine transportierbar. Insbesondere können lange Kommunikationswege zwischen dem Speichermedium und der CNC-Werkzeugmaschine und/oder der Datenverarbeitungseinheit vermieden werden.

Darüber hinaus wird vorgeschlagen, dass das Werkzeugtransportmittel eine weitere Werkzeugidentifikationseinheit und ein Anzeigeelement aufweist, wobei das Anzeigeelement dazu vorgesehen ist, ausgelöst durch eine Werkzeugidentifikation mittels der weiteren Werkzeugidentifikationseinheit aus dem Speichermedium des Werkzeugtransportmittels ausgelesene Werkzeuginformationen des Zerspanungswerkzeugs, dem Zerspanungswerkzeug zugehörige Werkzeugeinstellungsdatensätze, dem Zerspanungswerkzeug zugehörige Werkzeugvermessungsdatensätze und/oder dem Zerspanungswerkzeug zugehörige Werkzeugprozessdatensätze anzuzeigen. Vorzugsweise umfasst die weitere Werkzeugidentifikationseinheit, insbesondere analog zu der Werkzeugidentifikationseinheit, einen Handscanner. Alternativ ist die weitere Werkzeugidentifikationseinheit in das Werkzeugtransportmittel integriert. Insbesondere ist die weitere Werkzeugidentifikationseinheit zu einem Erfassen des Werkzeugidentifikationsmerkmals vorgesehen. Vorzugsweise ist das Anzeigeelement als Bildschirm, insbesondere Touchscreen, und/oder Videoprojektor ausgebildet. Vorzugsweise ist das Anzeigeelement dazu vorgesehen zumindest einen zu dem Werkzeugidentifikationsmerkmal zugeordneten Werkzeugdatensatz, insbesondere den Werkzeugeinstellungsdatensatz, den Werkzeugvermessungsdatensatz und/oder den Werkzeugprozessdatensatz, und/oder die zugeordnete CNC-Werkzeugmaschine, insbesondere die Aufgabe innerhalb der CNC-Werkzeugmaschine und/oder den Werkzeugmagazinplatz innerhalb der CNC-Werkzeugmaschine, anzuzeigen. Vorzugsweise weist das Werkzeugtransportmittel zumindest ein Eingabeelement, insbesondere den Touchscreen, zu einer Bearbeitung des Werkzeugdatensatzes, insbesondere des Werkzeugeinstellungsdatensatzes, des Werkzeugvermessungsdatensatzes und/oder des Werkzeugprozessdatensatzes, des erfassten Werkzeugidentifikationsmerkmals und/oder der Zuordnung der CNC-Werkzeugmaschine, insbesondere der Aufgabe innerhalb der CNC-Werkzeugmaschine und/oder des Werkzeugmagazinplatzes innerhalb der CNC-Werkzeugmaschine, auf. Durch die erfindungsgemäße Ausgestaltung können vorteilhaft die in dem Speichermedium hinterlegten Daten jederzeit abgerufen werden. Insbesondere kann vorteilhaft eine Überprüfung des angelieferten Zerspanungswerkzeugs, insbesondere durch einen Benutzer, vorgenommen werden.

Ferner wird ein System mit der das Speichermedium aufweisenden erfindungsgemäßen Kommunikationsvorrichtung, mit einem Werkzeugeinstell- und/oder Werkzeugmessgerät, mit einer CNC-Werkzeugmaschine und/oder mit zumindest einem Zerspanungswerkzeug vorgeschlagen. Vorzugsweise umfasst das System die der CNC-Werkzeugmaschine zugeordnete Datenverarbeitungseinheit. Vorzugsweise ist die Datenverarbeitungseinheit in die CNC-Werkzeugmaschine integriert. Durch die erfindungsgemäße Ausgestaltung kann ein System mit einer vorteilhaft zuverlässigen Bestückung der CNC-Werkzeugmaschine mit Zerspanungswerkzeugen bereitgestellt werden. Insbesondere kann ein System mit einem vorteilhaft geringen manuellen Verwaltungsbedarf der Werkzeugdatensätze bereitgestellt werden. Insbesondere kann eine Durchlaufzeit für eine Bestückung der CNC-Werkzeugmaschine vorteilhaft gering gehalten werden.

Das erfindungsgemäße Verfahren, die erfindungsgemäße Kommunikationsvorrichtung und/oder das erfindungsgemäße System sollen/soll hierbei nicht auf die oben beschriebene Anwendung und Ausführungsform beschränkt sein. Insbesondere können/kann das erfindungsgemäße Verfahren, die erfindungsgemäße Kommunikationsvorrichtung und/oder das erfindungsgemäße System zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes System mit einer erfindungsgemäßen Kommunikationsvorrichtung,
- Fig. 2: ein Flussdiagramm eines erfindungsgemäßen Verfahrens und
- Fig. 3: das erfindungsgemäße System mit einer weiteren Konfiguration der erfindungsgemäßen Kommunikationseinheit.

### Beschreibung des Ausführungsbeispiels

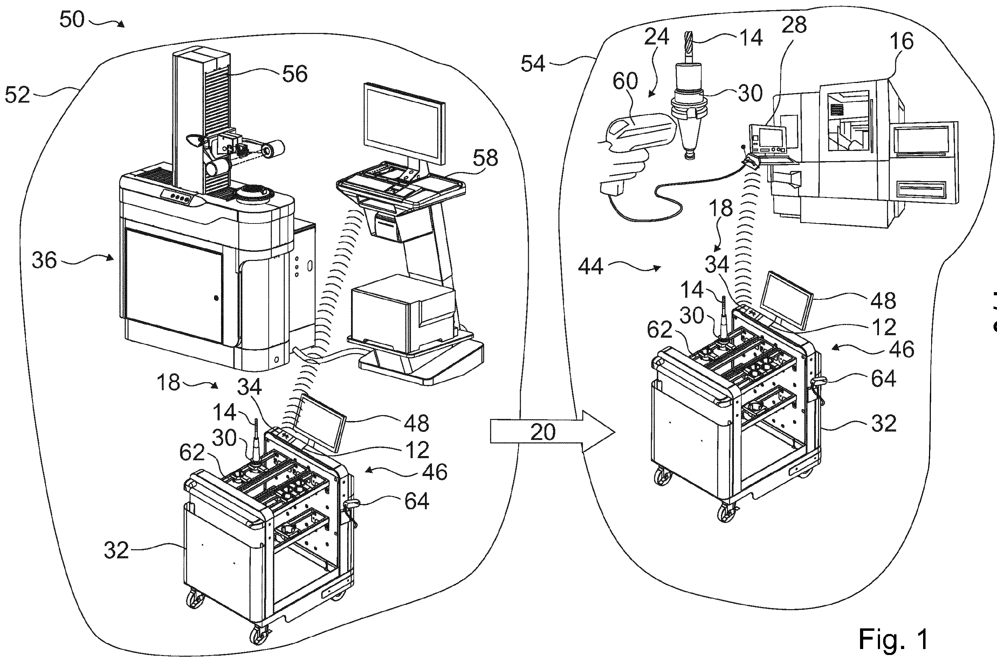

Fig. 1 zeigt ein System 50. Das System 50 umfasst eine Kommunikationsvorrichtung 44. Die Kommunikationsvorrichtung 44 weist ein Speichermedium 12 auf. Das System 50 umfasst ein Werkzeugeinstell- und/oder Werkzeugmessgerät 36. Das System 50 umfasst eine Computerized Numerical Control-gesteuerte Werkzeugmaschine (CNC-Werkzeugmaschine) 16. Das System 50 umfasst ein Zerspanungswerkzeug 14.

Das Werkzeugeinstell- und/oder Werkzeugmessgerät 36 ist dazu vorgesehen, das Zerspanungswerkzeug 14 zu vermessen und/oder einzustellen. Das Werkzeugeinstell- und/oder Werkzeugmessgerät 36 ist dazu vorgesehen, zumindest einen Werkzeugdatensatz, insbesondere einen Werkzeugeinstellungsdatensatz, einen Werkzeugvermessungsdatensatz und/oder einen Werkzeugprozessdatensatz, des Zerspanungswerkzeugs 14 zu erstellen und/oder zu ermitteln. Das Werkzeugeinstell- und/oder Werkzeugmessgerät 36 umfasst zumindest eine Einstell- und/oder Messstation 56 zu einem Einstellen und Vermessen des Zerspanungswerkzeugs 14. Das Werkzeugeinstell- und/oder Werkzeugmessgerät 36 umfasst zumindest eine Benutzerschnittstelle 58 zu einer Bedienung der Einstell- und/oder Messstation 56 und/oder zu einer Verwaltung der ermittelten Werkzeugdatensätze, insbesondere der Werkzeugeinstellungsdatensätze, der Werkzeugvermessungsdatensätze und/oder der Werkzeugprozessdatensätze, insbesondere einer Mehrzahl von Zerspanungswerkzeugen.

Das Zerspanungswerkzeug 14 ist dazu vorgesehen, in die CNC-Werkzeugmaschine 16 eingesetzt zu werden, insbesondere zu einer Bearbeitung eines Werkstücks. Das System 50, insbesondere die CNC-Werkzeugmaschine 16, umfasst eine Werkzeugaufnahme 30 zu einer Halterung des Zerspanungswerkzeugs 14. Die Werkzeugaufnahme 30 ist zerstörungsfrei lösbar mit der CNC-Werkzeugmaschine 16 verbunden.

Das System 50 umfasst eine Datenverarbeitungseinheit 28, die der CNC-Werkzeugmaschine 16 zugeordnet ist, insbesondere in die CNC-Werkzeugmaschine 16 integriert ist und/oder an der CNC-Werkzeugmaschine 16 angeordnet ist. Die Datenverarbeitungseinheit 28 ist dazu vorgesehen, zumindest einen Werkzeugdatensatz, insbesondere den Werkzeugeinstellungsdatensatz, den Werkzeugvermessungsdatensatz und/oder den Werkzeugprozessdatensatz, des Zerspanungswerkzeugs 14 zu verarbeiten, insbesondere zu einer Steuerung oder Regelung der CNC-Werkzeugmaschine 16 auszuwerten.

Die CNC-Werkzeugmaschine 16 und das Werkzeugeinstell-und/oder Werkzeugmessgerät 36 sind voneinander beabstandet angeordnet, beispielsweise zu einem räumlichen Trennen eines Vorbereitungsbereichs 52 von einem Arbeitsbereich 54. Die Kommunikationsvorrichtung 44 ist dazu vorgesehen, zumindest einen von dem Werkzeugeinstell-und/oder Werkzeugmessgerät 36, insbesondere innerhalb des Vorbereitungsbereich 52, erstellten Werkzeugdatensatz des Zerspanungswerkzeugs 14 und/oder zumindest eines weiterern Zerspanungswerkzeugs in dem Speichermedium 12 zu speichern und der CNC-Werkzeugmaschine 16, insbesondere innerhalb des Arbeitsbereichs 54, zur Verfügung zu stellen. Die Kommunikationsvorrichtung 44 ist zu einer Übermittlung zumindest des mittels der Werkzeugeinstell- und/oder Werkzeugmessgerät 36 ermittelten Werkzeugeinstellungsdatensatzes des Zerspanungswerkzeugs 14, des Werkzeugvermessungsdatensatzes des Zerspanungswerkzeugs 14 und/oder des Werkzeugprozessdatensatzes des Zerspanungswerkzeugs 14 an die CNC-Werkzeugmaschine 16 vorgesehen.

Die Kommunikationsvorrichtung 44 umfasst eine, insbesondere der CNC-Werkzeugmaschine 16 zugeordnete, Werkzeugidentifikationseinheit 24. Die Werkzeugidentifikationseinheit 24 umfasst einen Handscanner 60, insbesondere zu einer Erfassung eines Werkzeugidentifikationsmerkmals von dem Zerspanungswerkzeug 14 und/oder der Werkzeugaufnahme 30. Die Werkzeugidentifikationseinheit 24 ist der CNC-Werkzeugmaschine 16 zugeordnet, insbesondere an der der CNC-Werkzeugmaschine 16 zugeordneten Datenverarbeitungseinheit 28 zu einem Datenaustausch angeschlossen. Es ist auch denkbar, dass an der Werkzeugidentifikationseinheit 24, insbesondere an dem Handscanner 60, eine drahtlose Datenschnittstelle einer Datenkommunikationseinheit 18 der Kommunikationsvorrichtung 44 angeordnet ist, insbesondere zu einer drahtlosen Übertragung eines erfassten Werkzeugidentifikationsmerkmals an die Datenverarbeitungseinheit 28 und/oder an das Speichermedium 12. Die Kommunikationsvorrichtung 44 umfasst das, insbesondere elektronisches, Speichermedium 12, welches dazu vorgesehen ist, zumindest den Werkzeugeinstellungsdatensatz des Zerspanungswerkzeugs 14, zumindest den Werkzeugvermessungsdatensatz des Zerspanungswerkzeugs 14 und/oder zumindest den Werkzeugprozessdatensatz des Zerspanungswerkzeugs 14 abzuspeichern. Die Kommunikationsvorrichtung 44 umfasst die Datenkommunikationseinheit 18. Die Datenkommunikationseinheit 18 umfasst zumindest eine drahtlose Datenkommunikationsschnittstelle 34, insbesondere eine Bluetooth-Schnittstelle und/oder eine WLAN-Schnittstelle. Die Datenkommunikationseinheit 18 ist dazu vorgesehen, ausgelöst durch eine Identifikation des Zerspanungswerkzeugs 14 mittels der Werkzeugidentifikationseinheit 24 zumindest den dem Zerspanungswerkzeug 14 zugehörigen Werkzeugeinstellungsdatensatz, zumindest den dem Zerspanungswerkzeug 14 zugehörigen Werkzeugvermessungsdatensatz und/oder zumindest den dem Zerspanungswerkzeug 14 zugehörigen Werkzeugprozessdatensatz aus dem Speichermedium 12 auszulesen. Die Datenkommunikationseinheit 18 ist dazu vorgesehen, ausgelöst durch eine Identifikation des Zerspanungswerkzeugs 14 mittels der Werkzeugidentifikationseinheit 24 zumindest den dem Zerspanungswerkzeug 14 zugehörigen Werkzeugeinstellungsdatensatz, zumindest den dem Zerspanungswerkzeug 14 zugehörigen Werkzeugvermessungsdatensatz und/oder zumindest den dem Zerspanungswerkzeug 14 zugehörigen Werkzeugprozessdatensatz an die CNC-Werkzeugmaschine 16, insbesondere an die der CNC-Werkzeugmaschine 16 zugeordnete Datenverarbeitungseinheit 28, zu übertragen, insbesondere mittels der drahtlosen Datenkommunikationsschnittstelle 34.

Die Kommunikationsvorrichtung 44 umfasst ein Werkzeugtransportmittel 32, insbesondere einen Werkzeugwagen, zu einer Anlieferung des Zerspanungswerkzeugs 14 an die CNC-Werkzeugmaschine 16, an welchem das Speichermedium 12 angeordnet ist. Das Werkzeugtransportmittel 32 ist als Werkzeugwagen ausgebildet. Das Werkzeugtransportmittel 32 ist dazu vorgesehen, das Zerspanungswerkzeug 14 und/oder weitere Zerspanungswerkzeuge zwischen dem Vorbereitungsbereich 52 und dem Arbeitsbereich 54 zu transportieren. Das Werkzeugtransportmittel 32 umfasst zumindest ein Werkzeugaufbewahrungselement 62, beispielsweise eine Ablage, eine Aufhängung, eine Klipp, einen Ständer o. dgl., zu einer Aufbewahrung, insbesondere einer temporären Fixierung, des Zerspanungswerkzeugs 14 und/oder weiterer Zerspanungswerkzeuge an dem Werkzeugtransportmittel 32. Das Speichermedium 12 ist fest in das Werkzeugtransportmittel 32 integriert und/oder zerstörungsfrei lösbar mit dem Werkzeugtransportmittel 32 verbunden.

An dem Werkzeugtransportmittel 32 ist zumindest eine drahtlose Datenkommunikationsschnittstelle 34 der Datenkommunikationseinheit 18 angeordnet. Die drahtlose Datenkommunikationsschnittstelle 34 ist mit dem Speichermedium 12 signaltechnisch verbunden. Das Werkzeugtransportmittel 32 umfasst eine weitere Werkzeugidentifikationseinheit 46. Das Werkzeugtransportmittel 32 umfasst ein Anzeigeelement 48. Das Anzeigeelement 48 ist dazu vorgesehen, ausgelöst durch eine Werkzeugidentifikation mittels der weiteren Werkzeugidentifikationseinheit 46 aus dem Speichermedium 12 des Werkzeugtransportmittels 32 ausgelesene Werkzeuginformationen des Zerspanungswerkzeugs 14, dem Zerspanungswerkzeug 14 zugehörige Werkzeugeinstellungsdatensätze, dem Zerspanungswerkzeug 14 zugehörige Werkzeugvermessungsdatensätze und/oder dem Zerspanungswerkzeug 14 zugehörige Werkzeugprozessdatensätze anzuzeigen. Die weitere Werkzeugidentifikationseinheit 46 umfasst zumindest einen weiteren Handscanner 64 Das Anzeigeelement 48 ist als Bildschirm ausgebildet. In einer alternativen Ausgestaltung ist das Speichermedium 12 stationär, insbesondere zwischen dem Vorbereitungsbereich 52 und dem Arbeitsbereich 54, insbesondere in einer Kommunikationsreichweite zu dem Werkzeugeinstell- und/oder Werkzeugmessgerät 36 und der Datenverarbeitungseinheit 28, angeordnet.

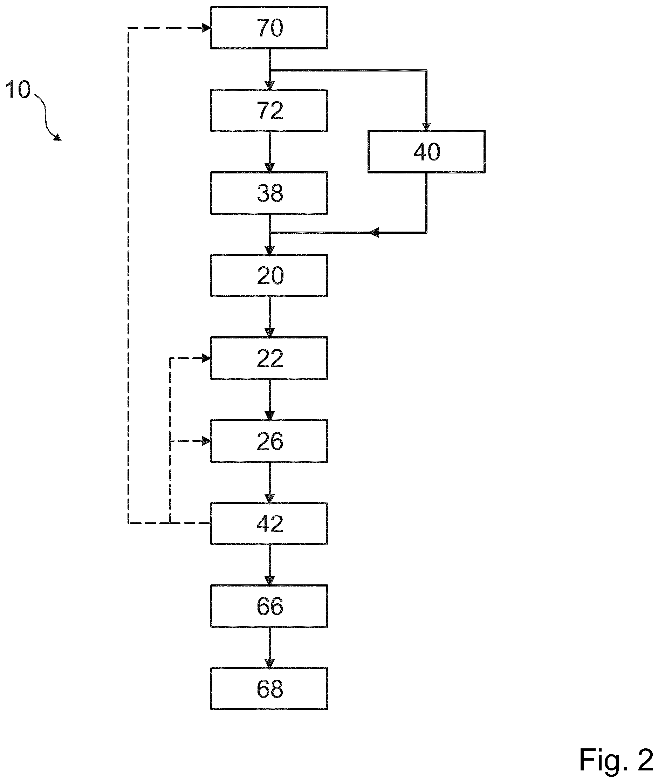

Figur 2 zeigt ein Flussdiagramm eines Verfahrens 10. Das Verfahren 10 ist zu einer Übermittlung zumindest des auf dem, insbesondere elektronischen, Speichermedium 12 abgespeicherten Werkzeugeinstellungsdatensatzes des Zerspanungswerkzeugs 14, des Werkzeugvermessungsdatensatzes des Zerspanungswerkzeugs 14 und/oder des Werkzeugprozessdatensatzes des Zerspanungswerkzeugs 14 an die CNC-Werkzeugmaschine 16 mit der Datenkommunikationseinheit 18 vorgesehen.

In einem Werkzeuganlieferungsschritt 20 des Verfahrens 10 wird zumindest das Zerspanungswerkzeug 14 an die CNC-Werkzeugmaschine 16 angeliefert. Das Zerspanungswerkzeug 14 wird in dem Werkzeuganlieferungsschritt 20 aus dem Vorbereitungsbereich 52 in den Arbeitsbereich 54 transportiert. Das Zerspanungswerkzeug 14 und/oder zumindest ein weiteres Zerspanungswerkzeug werden/wird in dem Werkzeuganlieferungsschritt 20 mittels des Werkzeugtransportmittels 32 angeliefert. Es ist aber auch denkbar, dass das das Zerspanungswerkzeug 14 und/oder zumindest ein weiteres Zerspanungswerkzeug in dem Werkzeuganlieferungsschritt 20 von Hand zu der CNC-Werkzeugmaschine 16 transportiert wird.

In einem Werkzeugidentifikationsschritt 22 des Verfahrens 10 wird das angelieferte Zerspanungswerkzeug 14 mittels der, insbesondere mittels der CNC-Werkzeugmaschine 16 zugeordneten, Werkzeugidentifikationseinheit 24 identifiziert. In dem Werkzeugidentifikationsschritt 22 wird mittels der Werkzeugidentifikationseinheit 24 das Werkzeugidentifikationsmerkmal von dem Zerspanungswerkzeugs 14 und/oder von der Werkzeugaufnahme 30 eingelesen. In dem Werkzeugidentifikationsschritt 22 wird das erfasste Werkzeugidentifikationsmerkmal an die Datenverarbeitungseinheit 28 und/oder das Speichermedium 12 übermittelt.

In einem Ausleseschritt 26 des Verfahrens 10 wird zumindest der Werkzeugeinstellungsdatensatz des Zerspanungswerkzeugs 14, zumindest der Werkzeugvermessungsdatensatz des Zerspanungswerkzeugs 14 und/oder zumindest der Werkzeugprozessdatensatz des Zerspanungswerkzeugs 14 von der Datenkommunikationseinheit 18 aus dem Speichermedium 12 ausgelesen. Der Ausleseschritt 26 liegt zeitlich nach dem Werkzeugidentifikationsschritt 22. In dem Ausleseschritt 26 wird der Werkzeugeinstellungsdatensatz des Zerspanungswerkzeugs 14, zumindest der Werkzeugvermessungsdatensatz des Zerspanungswerkzeugs 14 und/oder zumindest der Werkzeugprozessdatensatz des Zerspanungswerkzeugs 14 von der Datenkommunikationseinheit 18 an zumindest die der CNC-Werkzeugmaschine 16 zugeordnete Datenverarbeitungseinheit 28, insbesondere an die CNC-Werkzeugmaschine 16, übermittelt. Bei einer Übermittelung des Werkzeugeinstellungsdatensatzes des Zerspanungswerkzeugs 14, des Werkzeugvermessungsdatensatzes des Zerspanungswerkzeugs 14 und/oder des Werkzeugprozessdatensatzes des Zerspanungswerkzeugs 14 mittels der Datenkommunikationseinheit 18 ist das Speichermedium 12 getrennt von dem Zerspanungswerkzeug 14, getrennt von einer das Zerspanungswerkzeug 14 halternden Werkzeugaufnahme 30 und getrennt von der CNC-Werkzeugmaschine 16 angeordnet. In dem Ausleseschritt 26 wird das mit der Werkzeugidentifikationseinheit 24 erfasste Werkzeugidentifikationsmerkmal mit einem Datenidentifikationsmerkmal, welches insbesondere mit dem Werkzeugeinstellungsdatensatz, dem Werkzeugvermessungsdatensatz und/oder dem Werkzeugprozessdatensatz verknüpft ist, in dem Speichermedium 12 abgeglichen. In dem Ausleseschritt 26 wird zumindest ein zu dem Werkzeugidentifikationsmerkmal zugehöriger Werkzeugdatensatz, insbesondere der Werkzeugeinstellungsdatensatz, der Werkzeugvermessungsdatensatz und/oder der Werkzeugprozessdatensatz, von dem Speichermedium 12 mittels der Datenkommunikationseinheit 18 ausgelesen. In dem Ausleseschritt 26 wird der ausgelesene Werkzeugdatensatz an die Datenverarbeitungseinheit 28 mittels der Datenkommunikationseinheit 18 übermittelt.

Der Ausleseschritt 26 wird durch den Werkzeugidentifikationsschritt 22 automatisch ausgelöst. Der Ausleseschritt 26 wird durch ein Erfassen des Werkzeugidentifikationsmerkmals während des Werkzeugidentifikationsschritts 22 und/oder durch eine Übermittelung des erfassten Werkzeugidentifikationsmerkmals an die Datenverarbeitungseinheit 28 und/oder das Speichermedium 12 ausgelöst. Es ist denkbar, dass vor einem Auslösen des Ausleseschritts 26 ein Formatabgleich des erfassten Werkzeugidentifikationsmerkmals mit einem erwarteten Datenformat für ein Werkzeugidentifikationsmerkmal, insbesondere bezüglich einer Vollständigkeit des Werkzeugidentifikationsmerkmals, erfolgt. Bei einem negativen Ergebnis des Formatabgleichs wird eine Aufforderung, insbesondere an einen Benutzer, zu einem erneuten Einlesen, zu einer manuellen Korrektur und/oder zu einer Auswahl bekannter Werkzeugidentifikationsmerkmale mit zumindest einer Teilübereinstimmung mit dem erfassten Werkzeugidentifikationsmerkmal ausgegeben. Bei einem positiven Ergebnis des Formatabgleichs wird der Ausleseschritt 26 automatisch ausgelöst.

Das Speichermedium 12 ist zumindest während des Werkzeuganlieferungsschritts 20 an dem Werkzeugtransportmittel 32, insbesondere an dem Werkzeugwagen, zu einer Anlieferung des Zerspanungswerkzeugs 14 an die CNC-Werkzeugmaschine 16 angeordnet. Das Speichermedium 12 wird während des Werkzeuganlieferungsschritts 20, insbesondere mittels des Werkzeugtransportmittels 32, von dem Vorbereitungsbereich 52, insbesondere von dem Werkzeugeinstell- und/oder Werkzeugmessgerät 36, zu dem Arbeitsbereich 54, insbesondere zu der Datenverarbeitungseinheit 28, transportiert. Das Speichermedium 12 ist in dem Werkzeugtransportmittel 32 fest integriert und/oder zumindest während des Werkzeuganlieferungsschritts 20, beispielsweise in einem Speicherkartenlesegerät des Werkzeugtransportmittels 32, zerstörungsfrei lösbar angeordnet.

In dem Ausleseschritt 26 wird der Werkzeugeinstellungsdatensatz des Zerspanungswerkzeugs 14, der Werkzeugvermessungsdatensatz des Zerspanungswerkzeugs 14 und/oder der Werkzeugprozessdatensatz des Zerspanungswerkzeugs 14 mittels der drahtlosen Datenkommunikationsschnittstelle 34 der Datenkommunikationseinheit 18 übertragen. In dem Ausleseschritt 26 wird zur Übertragung des Werkzeugeinstellungsdatensatzes des Zerspanungswerkzeugs 14, des Werkzeugvermessungsdatensatzes des Zerspanungswerkzeugs 14 und/oder des Werkzeugprozessdatensatzes des Zerspanungswerkzeugs 14 eine Bluetooth-Schnittstelle der drahtlosen Datenkommunikationsschnittstelle 34 und/oder einer WLAN-Schnittstelle der drahtlosen Datenkommunikationsschnittstelle 34 aktiviert. In dem Ausleseschritt 26 wird der Werkzeugeinstellungsdatensatz des Zerspanungswerkzeugs 14, der Werkzeugvermessungsdatensatz des Zerspanungswerkzeugs 14 und/oder der Werkzeugprozessdatensatz des Zerspanungswerkzeugs 14 von dem, insbesondere an dem Werkzeugtransportmittel 32 angeordneten, Speichermedium 12 mittels der Bluetooth-Schnittstelle und/oder der WLAN-Schnittstelle zu der Datenverarbeitungseinheit 28 übertragen. In dem Ausleseschritt 26 wird eine Zuordnung zu der CNC-Werkzeugmaschine 16, insbesondere einer Aufgabe innerhalb der CNC-Werkzeugmaschine 16 und/oder eines Werkzeugmagazinplatzes innerhalb der CNC-Werkzeugmaschine 16, aus dem Speichermedium 12 ausgelesen und an die der CNC-Werkzeugmaschine 16 zugeordnete Datenverarbeitungseinheit 28, insbesondere an die CNC-Werkzeugmaschine 16, übermittelt. In dem Ausleseschritt 26 wird die Zuordnung zu der CNC-Werkzeugmaschine 16, insbesondere der Aufgabe innerhalb der CNC-Werkzeugmaschine 16 und/oder des Werkzeugmagazinplatzes innerhalb der CNC-Werkzeugmaschine 16 von dem, insbesondere an dem Werkzeugtransportmittel 32 angeordneten, Speichermedium 12 mittels der Bluetooth-Schnittstelle und/oder der WLAN-Schnittstelle zu der Datenverarbeitungseinheit 28 übertragen. In einer alternativen Ausgestaltung wird die Aufgabe innerhalb der CNC-Werkzeugmaschine 16 und/oder des Werkzeugmagazinplatzes innerhalb der CNC-Werkzeugmaschine 16 an der der CNC-Werkzeugmaschine 16 zugeordneten Datenverarbeitungseinheit 28 während des Ausleseschritts 26 manuell zugeordnet, insbesondere eingegeben.

In einem Abgleichschritt 42 des Verfahrens 10 wird zumindest eine Plausibilität einer in einem Zuordnungsschritt 40 des Verfahrens 10 vorgenommenen Zuordnung und/oder zumindest eine Kompatibilität eines in dem Werkzeuganlieferungsschritt 20 an die CNC-Werkzeugmaschine 16 angelieferten Zerspanungswerkzeugs 14 mit der entsprechenden CNC-Werkzeugmaschine 16 abgeglichen. Bei einem positiven Ergebnis des Abgleichs in einem Bestückungs- und Bearbeitungsschritt 66 des Verfahrens 10 wird die CNC-Werkzeugmaschine 16 mit dem Zerspanungswerkzeug 14, insbesondere gemeinsam mit der Werkzeugaufnahme 30, bestückt und anschließend ein Werkstück mit der CNC-Werkzeugmaschine 16 und dem Zerspanungswerkzeug 14 bearbeitet. In einem Rückabwicklungsschritt 68, insbesondere nach einem Abschluss einer Bearbeitung eines Werkstücks mit dem Zerspanungswerkzeug 14, wird der Werkzeugprozessdatensatz des Zerspanungswerkzeugs 14, insbesondere eine verbleibende Standzeit, von der Datenverarbeitungseinheit 28 aktualisiert. Der aktualisierte Werkzeugprozessdatensatz des Zerspanungswerkzeugs 14 wird an das Speichermedium 12 übermittelt und in dem Speichermedium 12, insbesondere innerhalb einer Datenbank des Speichermediums 12, abgespeichert. In dem Rückabwicklungsschritt 68 wird das Zerspanungswerkzeug 14, insbesondere gemeinsam mit der Werkzeugaufnahme 30, aus der CNC-Werkzeugmaschine 16 herausgenommen. In dem Rückabwicklungsschritt 68 wird das Zerspanungswerkzeug 14, insbesondere mittels des Werkzeugtransportmittels 32, in den Vorbereitungsbereich 52, einen Lagerbereich und/oder einen Wartungsbereich insbesondere gemeinsam mit dem Speichermedium 12, transportiert.

In einem Vorbereitungsschritt 70 des Verfahrens 10 wird das Zerspanungswerkzeug 14 an der Werkzeugaufnahme 30 befestigt. Das Werkzeugidentifikationsmerkmal wird, insbesondere während des Vorbereitungsschritts 70, von dem Zerspanungswerkzeug 14 und/oder von der Werkzeugaufnahme 30 mit der weiteren Werkzeugidentifikationseinheit 46 und/oder einer, insbesondere der Werkzeugeinstell- und/oder Werkzeugmessgerät 36 zugeordneten zusätzlichen Werkzeugidentifikationseinheit eingelesen.

Erfindungsgemäß wird in zumindest einen Vermessungs- und/oder Einstellschritt 72 des Verfahrens 10 zumindest der Werkzeugeinstellungsdatensatz des Zerspanungswerkzeugs 14, zumindest der Werkzeugvermessungsdatensatz des Zerspanungswerkzeugs 14 und/oder zumindest der Werkzeugprozessdatensatz des Zerspanungswerkzeugs 14 von dem Werkzeugeinstell- und/oder Werkzeugmessgerät 36 ermittelt und/oder erstellt. Das Zerspanungswerkzeug 14 wird, insbesondere gemeinsam mit der Werkzeugaufnahme 30, zu einer Vermessung und/oder einer Einstellung an dem Werkzeugeinstell- und/oder Werkzeugmessgerät 36, insbesondere an der Einstell- und/oder Messstation 56, angeordnet.

In einem Eingabeschritt 38 des Verfahrens 10 wird der ermittelte Werkzeugeinstellungsdatensatz des Zerspanungswerkzeugs 14, der ermittelte Werkzeugvermessungsdatensatz des Zerspanungswerkzeugs 14 und/oder der ermittelte Werkzeugprozessdatensatz des Zerspanungswerkzeugs 14, insbesondere drahtlos, an das Speichermedium 12 übertragen und in dem Speichermedium 12 abgespeichert. In dem Eingabeschritt 38 und/oder in dem Vermessungs- und/oder Einstellschritt 72 wird der ermittelte Werkzeugeinstellungsdatensatz, der ermittelte Werkzeugvermessungsdatensatz und/oder der ermittelte Werkzeugprozessdatensatz mit dem erfassten Werkzeugidentifikationsmerkmal als Datenidentifikationsmerkmal verknüpft. In dem Eingabeschritt 38 wird der ermittelte Werkzeugeinstellungsdatensatz, der ermittelte Werkzeugvermessungsdatensatz und/oder der ermittelte Werkzeugprozessdatensatz über die drahtlose Datenkommunikationsschnittstelle 34 von dem Werkzeugeinstell- und/oder Werkzeugmessgerät 36 an das, insbesondere an dem Werkzeugtransportmittel 32 angeordnete, Speichermedium 12 übertragen. Von dem Speichermedium 12 werden Werkzeugeinstellungsdatensätze, Werkzeugvermessungsdatensätze und/oder Werkzeugprozessdatensätze einer Mehrzahl an Zerspanungswerkzeugen abgespeichert. Insbesondere werden von dem Speichermedium 12 die zu verschiedenen Zerspanungswerkzeugen gehörenden Werkzeugeinstellungsdatensätze, Werkzeugvermessungsdatensätze und/oder Werkzeugprozessdatensätze mit je einem zugehörigen Werkzeugidentifikationsmerkmal als Datenidentifikationsmerkmal abgespeichert. Jedem in dem Speichermedium 12 abgespeicherten Werkzeugdatensatz ist über das Datenidentifikationsmerkmal und/oder das Werkzeugidentifikationsmerkmal eindeutig ein bestimmtes Zerspanungswerkzeug und/oder jedem Zerspanungswerkzeug zumindest ein Werkzeugdatensatz zuordenbar. Das Speichermedium 12 weist eine Datenbank auf. Die Datenbank umfasst zumindest einen Werkzeugdatensatz, insbesondere einen Werkzeugeinstellungsdatensatz, einen Werkzeugvermessungsdatensatz und/oder einen Werkzeugprozessdatensatz einer Mehrzahl an Zerspanungswerkzeugen. In dem Eingabeschritt 38 wird dem ermittelten Werkzeugeinstellungsdatensatz des Zerspanungswerkzeugs 14, dem ermittelten Werkzeugvermessungsdatensatz des Zerspanungswerkzeugs 14 und/oder dem ermittelten Werkzeugprozessdatensatz des Zerspanungswerkzeugs 14 eindeutig ein passendes Zerspanungswerkzeug in der Datenbank zugeordnet. Der ermittelte Werkzeugeinstellungsdatensatz, der ermittelte Werkzeugvermessungsdatensatz und/oder der ermittelte Werkzeugprozessdatensatz werden/wird um fehlende Angaben aus der Datenbank, beispielsweise um eine verbleibenden Standzeit, ergänzt. In dem zumindest einen Zuordnungsschritt 40 wird dem Zerspanungswerkzeug 14 eine CNC-Werkzeugmaschine 16, insbesondere eine Aufgabe innerhalb der CNC-Werkzeugmaschine 16 und/oder ein Werkzeugmagazinplatz innerhalb der CNC-Werkzeugmaschine 16, zugeordnet. Die Zuordnung während des Zuordnungsschritts 40 erfolgt über die Benutzerschnittstelle 58 des Werkzeugeinstell- und/oder Werkzeugmessgeräts 36 und/oder mittels eines Eingabeelements an dem Werkzeugtransportmittel 32.

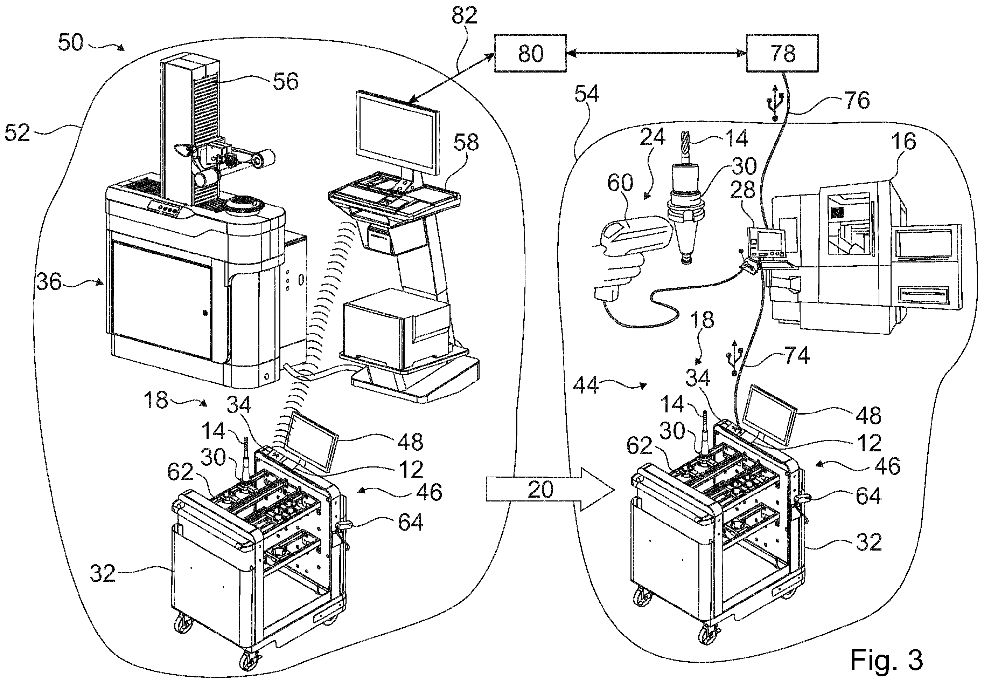

Figur 3 zeigt eine weitere Konfiguration der Kommunikationsvorrichtung 44. Das Speichermedium 12 ist während des Ausleseschritts 26 über eine USB-Verbindung 74 mit dem Datenverarbeitungseinheit 28 und/oder der CNC-Werkzeugmaschine 16 verbunden. Zumindest in dem Ausleseschritt 26 zur Übertragung des Werkzeugeinstellungsdatensatzes des Zerspanungswerkzeugs 14, des Werkzeugvermessungsdatensatzes des Zerspanungswerkzeugs 14 und/oder des Werkzeugprozessdatensatzes des Zerspanungswerkzeugs 14 emuliert das Speichermedium 12 und/oder die Datenkommunikationseinheit 18 einen USB-Massenspeicher. Das System 50 umfasst ein weiteres Speichermedium 78. Das weitere Speichermedium 78 ist analog zu dem Speichermedium 12 dazu vorgesehen, den Werkzeugeinstellungsdatensatz des Zerspanungswerkzeugs 14, den Werkzeugvermessungsdatensatz des Zerspanungswerkzeugs 14 und/oder den Werkzeugprozessdatensatz des Zerspanungswerkzeugs 14 zu speichern. Das weitere Speichermedium 78 ist an ein Netzwerk 80, insbesondere leitungsgebunden und/oder drahtlos, angeschlossen. Das weitere Speichermedium 78 emuliert zumindest während des Ausleseschritts 26 einen USB-Massenspeicher. Das weitere Speichermedium 78 ist über eine weitere USB-Verbindung 76 an der Datenverarbeitungseinheit 28, insbesondere an der CNC-Werkzeugmaschine 16, angeschlossen.

Insbesondere wird in dem Eingabeschritt 38 der ermittelte Werkzeugeinstellungsdatensatz des Zerspanungswerkzeugs 14, der ermittelte Werkzeugvermessungsdatensatz des Zerspanungswerkzeugs 14 und/oder der ermittelte Werkzeugprozessdatensatz des Zerspanungswerkzeugs 14, insbesondere über eine drahtlose und/oder leitungsgebundene Netzwerkverbindung 82, über das Netzwerk 80 an das weitere Speichermedium 78 übertragen. Insbesondere wird in dem Eingabeschritt 38 der ermittelte Werkzeugeinstellungsdatensatz des Zerspanungswerkzeugs 14, der ermittelte Werkzeugvermessungsdatensatz des Zerspanungswerkzeugs 14 und/oder der ermittelte Werkzeugprozessdatensatz des Zerspanungswerkzeugs 14 in dem weiteren Speichermedium 78 abgespeichert. Der ermittelte Werkzeugeinstellungsdatensatz, der ermittelte Werkzeugvermessungsdatensatz und/oder der ermittelte Werkzeugprozessdatensatz werden/wird in dem weiteren Speichermedium 78 analog zu dem Speichermedium 12 um fehlende Angaben aus einer Datenbank des weiteres Speichermediums 78, beispielsweise um eine verbleibende Standzeit, ergänzt. Insbesondere werden der ermittelte Werkzeugeinstellungsdatensatz, der ermittelte Werkzeugvermessungsdatensatz und/oder der ermittelte Werkzeugprozessdatensatz um fehlende Angaben aus einer über das Netzwerk 80 verbundenen externen Datenbank abgeglichen und/oder ergänzt. Es ist denkbar, dass das Speichermedium 12 über die drahtlose Datenkommunikationsschnittstelle 34 mit dem Netzwerk 80 verbunden ist. Es ist insbesondere auch denkbar, dass das Speichermedium 12 und das weitere Speichermedium 78 dasselbe Speichermedium darstellen.

### Bezugszeichen

- 10: Verfahren
- 12: Speichermedium
- 14: Zerspanungswerkzeugs
- 16: CNC-Werkzeugmaschine
- 18: Datenkommunikationseinheit
- 20: Werkzeuganlieferungsschritt
- 22: Werkzeugidentifikationsschritt
- 24: Werkzeugidentifikationseinheit
- 26: Ausleseschritt
- 28: Datenverarbeitungseinheit
- 30: Werkzeugaufnahme
- 32: Werkzeugtransportmittel
- 34: Datenkommunikationsschnittstelle
- 36: Werkzeugeinstell- und/oder Werkzeugmessgerät
- 38: Eingabeschritt
- 40: Zuordnungsschritt
- 42: Abgleichschritt
- 44: Kommunikationsvorrichtung
- 46: weitere Werkzeugidentifikationseinheit
- 48: Anzeigeelement
- 50: System
- 52: Vorbereitungsbereich
- 54: Arbeitsbereich
- 56: Einstell- und/oder Messstation
- 58: Benutzerschnittstelle
- 60: Handscanner
- 62: Werkzeugaufbewahrungselement
- 64: Weiterer Handscanner
- 66: Bestückungs- und Bearbeitungsschritt
- 68: Rückabwicklungsschritt
- 70: Vorbereitungsschritt
- 72: Vermessungs- und/oder Einstellschritt
- 74: USB-Verbindung
- 76: Weitere USB-Verbindung
- 78: Weiteres Speichermedium
- 80: Netzwerk
- 82: Netzwerkverbindung

## Patentansprüche

1. Verfahren zu einer Übermittlung zumindest eines auf einem elektronischen Speichermedium (12) abgespeicherten Werkzeugeinstellungsdatensatzes eines Zerspanungswerkzeugs (14), eines Werkzeugvermessungsdatensatzes des Zerspanungswerkzeugs (14) und/oder eines Werkzeugprozessdatensatzes des Zerspanungswerkzeugs (14) an eine Computerized Numerical Control-gesteuerte Werkzeugmaschine (CNC-Werkzeugmaschine, 16), mit einer Datenkommunikationseinheit (18),
wobei in einem Vorbereitungsschritt (70) ein eindeutiges Werkzeugidentifikationsmerkmal des Zerspanungswerkzeugs (14) erfasst wird,
wobei in einem Vermessungs- und/oder Einstellschritt (72) zumindest der Werkzeugeinstellungsdatensatz des Zerspanungswerkzeugs (14), zumindest der Werkzeugvermessungsdatensatz des Zerspanungswerkzeugs (14) und/oder zumindest der Werkzeugprozessdatensatz des Zerspanungswerkzeugs (14) von einem Werkzeugeinstell- und/oder Werkzeugmessgerät (36) ermittelt und/oder erstellt wird,
wobei dem Werkzeugeinstellungsdatensatz des Zerspanungswerkzeugs (14), dem Werkzeugvermessungsdatensatz des Zerspanungswerkzeugs (14) und/oder dem Werkzeugprozessdatensatz des Zerspanungswerkzeugs (14) das erfasste Werkzeugidentifikationsmerkmal als Datenidentifikationsmerkmal zugeordnet wird,
wobei in einem Eingabeschritt (38) der ermittelte Werkzeugeinstellungsdatensatz des Zerspanungswerkzeugs (14), der ermittelte Werkzeugvermessungsdatensatz des Zerspanungswerkzeugs (14) und/oder der ermittelte Werkzeugprozessdatensatz des Zerspanungswerkzeugs (14) gemeinsam mit dem Datenidentifikationsmerkmal an das Speichermedium (12) übertragen und in dem Speichermedium (12) abgespeichert wird,
wobei in einem Werkzeuganlieferungsschritt (20) zumindest das Zerspanungswerkzeug (14) an die CNC-Werkzeugmaschine (16) mittels eines Werkzeugwagens angeliefert wird und
wobei in einem Werkzeugidentifikationsschritt (22) das angelieferte Zerspanungswerkzeug (14) mittels einer Werkzeugidentifikationseinheit (24) identifiziert wird, indem das dem Zerspanungswerkzeug (14) zugeordnete eindeutige Werkzeugidentifikationsmerkmal von der Werkzeugidentifikationseinheit (24) erfasst wird,
wobei das Verfahren
einen Ausleseschritt (26) aufweist, welcher durch den Werkzeugidentifikationsschritt (22) automatisch ausgelöst wird,
wobei in dem Ausleseschritt (26) Datenidentifikationsmerkmale ausgelesen werden und an die Werkzeugidentifikationseinheit (24) übertragen werden,
wobei in dem Ausleseschritt (26) zumindest der Werkzeugeinstellungsdatensatz des Zerspanungswerkzeugs (14), zumindest der Werkzeugvermessungsdatensatz des Zerspanungswerkzeugs (14) und/oder zumindest der Werkzeugprozessdatensatz des Zerspanungswerkzeugs (14) von der Datenkommunikationseinheit (18) aus dem Speichermedium (12) ausgelesen und an eine der CNC-Werkzeugmaschine (16) zugeordnete Datenverarbeitungseinheit (28) übermittelt wird,
**dadurch gekennzeichnet, dass** der Ausleseschritt (26) automatisch abgebrochen wird, wenn ein Abgleich des Werkzeugidentifikationsmerkmals mit dem Datenidentifikationsmerkmal negativ ausfällt,
wobei das Speichermedium (12), aus dem zumindest der Werkzeugeinstellungsdatensatz des Zerspanungswerkzeugs (14), zumindest der Werkzeugvermessungsdatensatz des Zerspanungswerkzeugs (14) und/oder zumindest der Werkzeugprozessdatensatz des Zerspanungswerkzeugs (14) mittels der Datenkommunikationseinheit (18) der CNC-Werkzeugmaschine (16) ausgelesen wurde, an dem Werkzeugwagen, von dem das Zerspanungswerkzeug (14) an die CNC-Werkzeugmaschine (16) angeliefert wurde, und getrennt von dem Zerspanungswerkzeug (14), getrennt von einer das Zerspanungswerkzeug (14) halternden Werkzeugaufnahme (30) und getrennt von der CNC-Werkzeugmaschine (16) angeordnet ist, und
wobei in dem Ausleseschritt (26) der Werkzeugeinstellungsdatensatz des Zerspanungswerkzeugs (14), der Werkzeugvermessungsdatensatz des Zerspanungswerkzeugs (14) und/oder der Werkzeugprozessdatensatz des Zerspanungswerkzeugs (14) mittels einer mit dem Speichermedium (12) signaltechnisch verbindbaren drahtlosen Datenkommunikationsschnittstelle (34) der Datenkommunikationseinheit (18) zwischen dem an dem Werkzeugwagen angeordneten Speichermedium (12) und der Datenverarbeitungseinheit (28) der CNC-Werkzeugmaschine (16) übertragen wird, und zur Übertragung des Werkzeugeinstellungsdatensatzes des Zerspanungswerkzeugs (14), des Werkzeugvermessungsdatensatzes des Zerspanungswerkzeugs (14) und/oder des Werkzeugprozessdatensatzes des Zerspanungswerkzeugs (14) eine Bluetooth-Schnittstelle der drahtlosen Datenkommunikationsschnittstelle (34) und/oder eine WLAN-Schnittstelle der drahtlosen Datenkommunikationsschnittstelle (34) aktiviert wird, welche eine Datenverbindung zwischen dem Speichermedium (12) des Werkzeugwagens und der Datenverarbeitungseinheit (28) der CNC-Werkzeugmaschine herstellt.

2. Verfahren nach Anspruch 1, **dadurch gekennzeichnet, dass** zumindest in dem Ausleseschritt (26) zur Übertragung des Werkzeugeinstellungsdatensatzes des Zerspanungswerkzeugs (14), des Werkzeugvermessungsdatensatzes des Zerspanungswerkzeugs (14) und/oder des Werkzeugprozessdatensatzes des Zerspanungswerkzeugs das Speichermedium (12) und/oder die Datenkommunikationseinheit (18) einen USB-Massenspeicher emuliert.

3. Verfahren nach Anspruch 1 oder 2, **dadurch gekennzeichnet, dass** von dem Speichermedium (12) Werkzeugeinstellungsdatensätze, Werkzeugvermessungsdatensätze und/oder Werkzeugprozessdatensätze einer Mehrzahl an Zerspanungswerkzeugen abgespeichert werden.

4. Verfahren nach Anspruch 1, **dadurch gekennzeichnet, dass** das Speichermedium (12) eine Datenbank aufweist, wobei dem ermittelten Werkzeugeinstellungsdatensatz des Zerspanungswerkzeugs (14), dem ermittelten Werkzeugvermessungsdatensatz des Zerspanungswerkzeugs (14) und/oder dem ermittelten Werkzeugprozessdatensatz des Zerspanungswerkzeugs (14) in dem Eingabeschritt (38) eindeutig ein passendes Zerspanungswerkzeug in der Datenbank zugeordnet wird.

5. Verfahren nach einem der vorhergehenden Ansprüche, **gekennzeichnet durch** zumindest einen Zuordnungsschritt (40) in welchem dem Zerspanungswerkzeug (14) eine CNC-Werkzeugmaschine (16) zugeordnet wird.

6. Verfahren nach Anspruch 5, **dadurch gekennzeichnet, dass** die Zuordnung zu der CNC-Werkzeugmaschine (16) in dem Ausleseschritt (26) aus dem Speichermedium (12) ausgelesen und an die der CNC-Werkzeugmaschine (16) zugeordnete Datenverarbeitungseinheit (28) übermittelt wird.

7. Verfahren nach Anspruch 5 oder 6, **gekennzeichnet durch** einen Abgleichschritt (42), in welchem zumindest eine Plausibilität einer in dem Zuordnungsschritt (40) vorgenommenen Zuordnung und/oder zumindest eine Kompatibilität eines in dem Werkzeuganlieferungsschritt (20) an die CNC-Werkzeugmaschine (16) angelieferten Zerspanungswerkzeugs (14) mit der entsprechenden CNC-Werkzeugmaschine (16) abgeglichen wird.

8. Kommunikationsvorrichtung zu einer Übermittlung zumindest eines mittels einem Werkzeugeinstell- und/oder Werkzeugmessgerät (36) ermittelten Werkzeugeinstellungsdatensatzes eines Zerspanungswerkzeugs (14), eines Werkzeugvermessungsdatensatzes des Zerspanungswerkzeugs (14) und/oder eines Werkzeugprozessdatensatzes des Zerspanungswerkzeugs (14) an eine Computerized Numerical Control-gesteuerte Werkzeugmaschine (CNC-Werkzeugmaschine, 16), zu einer Durchführung eines Verfahrens nach einem der vorhergehenden Ansprüche, mit einer Werkzeugidentifikationseinheit (24), mit einem elektronischen Speichermedium (12), welches dazu vorgesehen ist, zumindest den Werkzeugeinstellungsdatensatz des Zerspanungswerkzeugs (14), zumindest den Werkzeugvermessungsdatensatz des Zerspanungswerkzeugs (14) und/oder zumindest den Werkzeugprozessdatensatz des Zerspanungswerkzeugs (14) abzuspeichern, mit einem Werkzeugwagen zu einer Anlieferung des Zerspanungswerkzeugs (14) an die CNC-Werkzeugmaschine (16), an welchem das Speichermedium (12) angeordnet ist und mit einer Datenkommunikationseinheit (18), welche dazu vorgesehen ist, ausgelöst durch eine Identifikation eines Zerspanungswerkzeugs (14) mittels der Werkzeugidentifikationseinheit (24) zumindest den dem Zerspanungswerkzeug (14) zugehörigen Werkzeugeinstellungsdatensatz, zumindest den dem Zerspanungswerkzeug (14) zugehörigen Werkzeugvermessungsdatensatz und/oder zumindest den dem Zerspanungswerkzeug (14) zugehörigen Werkzeugprozessdatensatz aus dem Speichermedium (12) auszulesen und an die CNC-Werkzeugmaschine (16) zu übertragen, wobei die Datenkommunikationseinheit (18) eine mit dem Speichermedium (12) signaltechnisch verbindbare drahtlose Datenkommunikationsschnittstelle (34) aufweist.

9. Kommunikationsvorrichtung nach Anspruch 8, **dadurch gekennzeichnet, dass** das Werkzeugtransportmittel (32) eine weitere Werkzeugidentifikationseinheit (46) und ein Anzeigeelement (48) aufweist, wobei das Anzeigeelement (48) dazu vorgesehen ist, ausgelöst durch eine Werkzeugidentifikation mittels der weiteren Werkzeugidentifikationseinheit (46) aus dem Speichermedium (12) des Werkzeugtransportmittels (32) ausgelesene Werkzeuginformationen des Zerspanungswerkzeugs (14), dem Zerspanungswerkzeug (14) zugehörige Werkzeugeinstellungsdatensätze, dem Zerspanungswerkzeug (14) zugehörige Werkzeugvermessungsdatensätze und/oder dem Zerspanungswerkzeug (14) zugehörige Werkzeugprozessdatensätze anzuzeigen.

10. System mit der das Speichermedium (12) aufweisenden Kommunikationsvorrichtung nach einem der Ansprüche 8 oder 9, mit einem Werkzeugeinstell- und/oder Werkzeugmessgerät (36), mit einer CNC-Werkzeugmaschine (16) und/oder mit zumindest einem Zerspanungswerkzeug (14).

## Claims

1. A method for transmitting at least one tool presetting data set of a machining tool (14) that is stored on an electronic storage medium (12), at least one tool measuring data set of the machining tool (14) that is stored on the electronic storage medium (12) and/or at least one tool processing data set of the machining tool (14) that is stored on the electronic storage medium (12) to a machine tool that is controlled via Computerized Numerical Control (CNC machine tool 16), with a data communication unit (18),
wherein during a preparation step (70), an unambigous tool identification characteristic of the machining tool (14) is captured,
wherein in a measuring and/or presetting step (72) at least the tool presetting data set of the machining tool (14), at least the tool measuring data set of the machining tool (14) and/or at least the tool processing data set of the machining tool (14) are/is determined and/or created via a tool presetting and/or tool measuring apparatus (36),
wherein the tool identification characteristic is allocated to the tool presetting data set of the machining tool (14), the tool measuring data set of the machining tool (14) and/or the tool processing data set of the machining tool (14) as a data identification characteristic,
wherein in an input step (38) the determined tool presetting data set of the machining tool (14), the determined tool measuring data set of the machining tool (14) and/or the determined tool processing data set of the machining tool (14) are/is transferred together with the tool identification characteristic to the storage medium (12) and are/is stored in the storage medium (12),
wherein in a tool delivery step (20) at least the machining tool (14) is delivered to the CNC machine tool (16) via a tool cart, and
wherein in a tool identification step (22) the delivered machining tool (14) is identified via a tool identification unit (24) by way of capturing via the tool identification unit (24) the unambiguous tool identification characteristic that is allocated to the machining tool (14),
wherein the method comprises a read-out step (26), which is automatically initiated by the tool identification step (22),
wherein in the read-out step (26) data identification characteristics are read out and are transferred to the tool identification unit (24),
wherein in the read-out step (26) at least the tool presetting data set of the machining tool (14), at least the tool measuring data set of the machining tool (14) and/or at least the tool processing data set of the machining tool (14) of the data communication unit (18) are/is read out of the storage medium (12) and are/is transmitted to a data processing unit (28) that is allocated to the CNC machine tool (16),
**characterized in that** the read-out step (26) is automatically stopped, if a matching of the tool identification characteristic with the data identification characteristic has a negative result,
wherein the storage medium (12), of which at least the tool presetting data set of the machining tool (14), at least the tool measuring data set of the machining tool (14) and/or at least the tool processing data set of the machining tool (14) are/is read out via the data communication unit (18) of the CNC machine tool (16), is arranged on the tool cart, by which the machining tool (14) is delivered to the CNC machine tool (16), and apart from the machining tool (14), apart from a tool holder (30) holding the machining tool (14) and apart from the CNC machine tool (16), and wherein in the read-out step (26) the tool presetting data set of the machining tool (14), the tool measuring data set of the machining tool (14) and/or the tool processing data set of the machining tool (14) are/is transferred via a wireless data communication interface (34) of the data communication unit (18), which is signal-technologically connectable with the storage medium (12), between the storage medium (12) arranged on the tool cart and the data processing unit (28) of the CNC tool machine (16), and for a transfer of the tool presetting data set of the machining tool (14), the tool measuring data set of the machining tool (14) and/or the tool processing data set of the machining tool (14) a Bluetooth interface of the wireless data communication interface (34) and/or a WLAN interface of the wireless data communication interface (34) are/is activated, which create/s a data connection between the storage medium (12) of the tool cart and the data processing unit (28) of the CNC machine tool.

2. The method according to claim 1, **characterized in that** at least in the read-out step (26), for the transfer of the tool presetting data set of the machining tool (14), the tool measuring data set of the machining tool (14) and/or the tool processing data set of the machining tool, the storage medium (12) and/or the data communication unit (18) emulate/s a USB mass storage device.

3. The method according to claim 1 or 2, **characterized in that** tool presetting data sets, tool measuring data sets and/or tool processing data sets of a plurality of machining tools are stored by the storage medium (12).

4. The method according to claim 1, **characterized in that** the storage medium (12) comprises a database, wherein in the input step (38) a suitable machining tool in the database is unambigously allocated to the determined tool presetting data set of the machining tool (14), the determined tool measuring data set of the machining tool (14) and/or the determined tool processing data set of the machining tool (14).

5. The method according to any one of the preceding claims, **characterized by** at least one allocation step (40), in which a CNC machine tool (16) is allocated to the machining tool (14).

6. The method according to claim 5, **characterized in that** in the read-out step (26) the allocation to the CNC machine tool (16) is read out of the storage medium (12) and is transmitted to the data processing unit (28) allocated to the CNC machine tool (16).

7. The method according to claim 5 or 6, **characterized by** a matching step (42), in which at least a plausibility of an allocation made in the allocation step (40) and/or at least a compatibility of a machining tool (14) delivered to the CNC machine tool (16) in the delivery step (20) are/is matched with the respective CNC machine tool (16).

8. A communication device for a transmission of at least one tool presetting data set of a machining tool (14), a tool measuring data set of the machining tool (14) and/or a tool processing data set of the machining tool (14), determined by means of a tool presetting and/or tool measuring apparatus (36), to a machine tool controlled by Computerized Numerical Control (CNC machine tool, 16) for an execution of a method according to any one of the preceding claims, with a tool identification unit (24), with an electronic storage medium (12) that is configured for a storage of at least the tool presetting data set of the machining tool (14), at least the tool measuring data set of the machining tool (14) and/or at least the tool processing data set of the machining tool (14), with a tool cart for a delivery of the machining tool (14) to the CNC machine tool (16), on which the storage medium (12) is arranged, and with a data communication unit (18), which is configured, initiated by an identification of the machining tool (14) via the tool identification unit (24), to read out of the storage medium (12) and transfer to the CNC machine tool (16) at least the tool presetting data set belonging to the machining tool (14), at least the tool measuring data set belonging to the machining tool (14) and/or at least the processing data set belonging to the machining tool (14), wherein the data communication unit (18) comprises a wireless data communication interface (34), which is signal-technologically connectable with the storage medium (12).

9. The communication device according to claim 8, **characterized in that** the tool transport device (32) comprises a further tool identification unit (46) and a display element (48), wherein the display element (48) is configured, initiated by a tool identification via the further tool identification unit (46), to display tool information of the machining tool (14) read out of the storage medium (12) of the tool transport device (32), tool presetting data sets belonging to the machining tool (14), tool measuring data sets belonging to the machining tool (14) and/or tool processing data sets belonging to the machining tool (14).

10. A system with the communication device comprising the storage medium (12) according to any one of claims 8 or 9, with a tool presetting and/or tool measuring apparatus (36), with a CNC machine tool (16) and/or with at least one machining tool (14).

## Revendications

1. Procédé de transmission d'au moins un jeu de données de réglage d'outil d'un outil d'enlèvement de copeaux (14), d'au moins un jeu de données de mesure d'outil de l'outil d'enlèvement de copeaux (14) et/ou d'au moins un jeu de données de processus d'outil de l'outil d'enlèvement de copeaux (14) stockés sur un support de stockage électronique (12) à une machine-outil à commande numérique par ordinateur (machine-outil CNC, 16), avec une unité de communication de données (18),
où, dans une étape de préparation (70), une caractéristique d'identification d'outil univoque de l'outil d'enlèvement de copeaux (14) est détectée,
où, dans une étape de mesure et/ou de réglage (72), au moins le jeu de données de réglage d'outil de l'outil d'enlèvement de copeaux (14), au moins le jeu de données de mesure d'outil de l'outil d'enlèvement de copeaux (14) et/ou au moins le jeu de données de processus d'outil de l'outil d'enlèvement de copeaux (14) est ou sont déterminé(s) et/ou établi(s) par un appareil de réglage d'outil et/ou de mesure d'outil (36),
où la caractéristique d'identification d'outil détectée est associée en tant que caractéristique d'identification de données au jeu de données de réglage d'outil de l'outil d'enlèvement de copeaux (14), au jeu de données de mesure d'outil de l'outil d'enlèvement de copeaux (14) et/ou au jeu de données de processus d'outil de l'outil d'enlèvement de copeaux (14),
où, dans une étape d'entrée (38), le jeu de données de réglage d'outil déterminé de
l'outil d'enlèvement de copeaux (14), le jeu de données de mesure d'outil déterminé de l'outil d'enlèvement de copeaux (14) et/ou le jeu de données de processus d'outil déterminé de l'outil d'enlèvement de copeaux (14) est ou sont transmis conjointement avec la caractéristique d'identification de données au support de stockage (12) et stocké(s) dans le support de stockage (12),
où, dans une étape de livraison d'outil (20), au moins l'outil d'enlèvement de copeaux (14) est livré à la machine-outil CNC (16) au moyen d'un chariot d'outil, et
où, dans une étape d'identification d'outil (22), l'outil d'enlèvement de copeaux (14) livré est identifié au moyen d'une unité d'identification d'outil (24) en ce que la caractéristique d'identification d'outil univoque associée à l'outil d'enlèvement de copeaux (14) est détectée par l'unité d'identification d'outil (24),
où le procédé comprend une étape de lecture (26) qui est déclenchée automatiquement par l'étape d'identification d'outil (22),
où, dans l'étape de lecture (26), des caractéristiques d'identification de données sont lues et transmises à l'unité d'identification d'outil (24),
où, dans l'étape de lecture (26), au moins le jeu de données de réglage d'outil de l'outil d'enlèvement de copeaux (14), au moins le jeu de données de mesure d'outil de l'outil d'enlèvement de copeaux (14) et/ou au moins le jeu de données de processus d'outil de l'outil d'enlèvement de copeaux (14) est ou sont lu(s) par l'unité de communication de données (18) à partir du support de stockage (12) et transmis à une unité de traitement de données (28) associée à la machine-outil CNC (16),
**caractérisé en ce que** l'étape de lecture (26) est automatiquement interrompue lorsqu'une comparaison de la caractéristique d'identification d'outil avec la caractéristique d'identification de données est négative,
où le support de stockage (12), à partir duquel au moins le jeu de données de réglage d'outil de l'outil d'enlèvement de copeaux (14), au moins le jeu de données de mesure d'outil de l'outil d'enlèvement de copeaux (14) et/ou au moins le jeu de données de processus d'outil de l'outil d'enlèvement de copeaux (14) a ou ont été lu(s) au moyen de l'unité de communication de données (18) de la machine-outil CNC (16), est disposé sur le chariot d'outil, à partir duquel l'outil d'enlèvement de copeaux (14) a été livré à la machine-outil CNC (16), et est disposé séparément de l'outil d'enlèvement de copeaux (14), séparément d'un logement d'outil (30) maintenant l'outil d'enlèvement de copeaux (14) et séparément de la machine-outil CNC (16), et
où, dans l'étape de lecture (26), le jeu de données de réglage d'outil de l'outil d'enlèvement de copeaux (14), le jeu de données de mesure d'outil de l'outil d'enlèvement de copeaux (14) et/ou le jeu de données de processus d'outil de l'outil d'enlèvement de copeaux (14) est ou sont transmis au moyen d'une interface de communication de données sans fil (34) de l'unité de communication de données (18) pouvant être reliée par signal au support de stockage (12) entre le support de stockage (12) disposé sur le chariot d'outil et l'unité de traitement de données (28) de la machine-outil CNC (16), et une interface Bluetooth de l'interface de communication de données sans fil (34) et/ou une interface WLAN de l'interface de communication de données sans fil (34) est ou sont activée(s), laquelle(s) établit(établissent) une liaison de données entre le support de stockage (12) du chariot d'outil et l'unité de traitement de données (28) de la machine-outil CNC.

2. Procédé selon la revendication 1, **caractérisé en ce qu'**au moins dans l'étape de lecture (26), pour la transmission du jeu de données de réglage d'outil de l'outil d'enlèvement de copeaux (14), du jeu de données de mesure d'outil de l'outil d'enlèvement de copeaux (14) et/ou du jeu de données de processus d'outil de l'outil d'enlèvement de copeaux, le support de stockage (12) et/ou l'unité de communication de données (18) émule(émulent) une mémoire de masse USB.

3. Procédé selon la revendication 1 ou 2, **caractérisé en ce que** des jeux de données de réglage d'outil, des jeux de données de mesure d'outil et/ou des jeux de données de processus d'outil d'une pluralité d'outils d'enlèvement de copeaux sont stockés par le support de stockage (12).

4. Procédé selon la revendication 1, **caractérisé en ce que** le support de stockage (12) présente une base de données, où un outil d'enlèvement de copeaux approprié est associé de manière univoque dans la base de données au jeu de données de réglage d'outil déterminé de l'outil d'enlèvement de copeaux (14), au jeu de données de mesure d'outil déterminé de l'outil d'enlèvement de copeaux (14) et/ou au jeu de données de processus d'outil déterminé de l'outil d'enlèvement de copeaux (14) dans l'étape d'entrée (38).

5. Procédé selon l'une quelconque des revendications précédentes, **caractérisé par** au moins une étape d'association (40) dans laquelle une machine-outil CNC (16) est associée à l'outil d'enlèvement de copeaux (14).

6. Procédé selon la revendication 5, **caractérisé en ce que** l'association à la machine-outil CNC (16) est lue dans l'étape de lecture (26) à partir du support de stockage (12) et transmise à l'unité de traitement de données (28) associée à la machine-outil CNC (16).

7. Procédé selon la revendication 5 ou 6, **caractérisé par** une étape de comparaison (42) dans laquelle au moins une plausibilité d'une association effectuée dans l'étape d'association (40) et/ou au moins une compatibilité d'un outil d'enlèvement de copeaux (14) livré à la machine-outil CNC (16) dans l'étape de livraison d'outil (20) est ou sont comparée(s) avec la machine-outil CNC (16) correspondante.

8. Dispositif de communication pour une transmission d'au moins un jeu de données de réglage d'outil d'un outil d'enlèvement de copeaux (14), d'un jeu de données de mesure d'outil de l'outil d'enlèvement de copeaux (14) et/ou d'un jeu de données de processus d'outil de l'outil d'enlèvement de copeaux (14) déterminé(s) au moyen d'un appareil de réglage d'outil et/ou de mesure d'outil (36) à une machine-outil à commande numérique informatisée (machine-outil CNC, 16), pour une mise en oeuvre d'un procédé selon l'une quelconque des revendications précédentes, avec une unité d'identification d'outil (24), avec un support de stockage électronique (12) qui est prévu pour stocker au moins le jeu de données de réglage d'outil de l'outil d'enlèvement de copeaux (14), au moins le jeu de données de mesure d'outil de l'outil d'enlèvement de copeaux (14) et/ou au moins le jeu de données de processus d'outil de l'outil d'enlèvement de copeaux (14), avec un chariot d'outil pour une livraison de l'outil d'enlèvement de copeaux (14) à la machine-outil CNC (16) sur laquelle le support de stockage (12) est disposé, et avec une unité de communication de données (18) qui est prévue pour lire, déclenché par une identification d'un outil d'enlèvement de copeaux (14) au moyen de l'unité d'identification d'outil (24), au moins le jeu de données de réglage d'outil associé à l'outil d'enlèvement de copeaux (14), au moins le jeu de données de mesure d'outil associé à l'outil d'enlèvement de copeaux (14) et/ou au moins le jeu de données de processus d'outil associé à l'outil d'enlèvement de copeaux (14) à partir du support de stockage (12) et pour la(les) transmettre à la machine-outil CNC (16), où l'unité de communication de données (18) comprend une interface de communication de données sans fil (34) pouvant être reliée par signal au support de stockage (12).

9. Dispositif de communication selon la revendication 8, **caractérisé en ce que** le moyen de transport d'outil (32) présente une autre unité d'identification d'outil (46) et un élément d'affichage (48), où l'élément d'affichage (48) est prévu pour afficher, déclenché par une identification d'outil au moyen de l'autre unité d'identification d'outil (46), des informations d'outil de l'outil d'enlèvement de copeaux (14) lues à partir du support de stockage (12) du moyen de transport d'outil (32), des jeux de données de réglage d'outil associés à l'outil d'enlèvement de copeaux (14), des jeux de données de mesure d'outil associés à l'outil d'enlèvement de copeaux (14) et/ou des jeux de données de processus d'outil associés à l'outil d'enlèvement de copeaux (14).

10. Système avec le dispositif de communication présentant le support de stockage (12) selon l'une quelconque des revendications 8 ou 9, avec un appareil de réglage d'outil et/ou de mesure d'outil (36), avec une machine-outil CNC (16) et/ou avec au moins un outil d'enlèvement de copeaux (14).
